(19) Europäisches Patentamt
European Patent Office
Office européen des brevets

(11) **EP 2 227 535 B1**

(12) **EUROPÄISCHE PATENTSCHRIFT**

(45) Veröffentlichungstag und Bekanntmachung des Hinweises auf die Patenterteilung:
**05.09.2012 Patentblatt 2012/36**

(21) Anmeldenummer: **08867487.4**

(22) Anmeldetag: **20.12.2008**

(51) Int Cl.:
*C12C 3/12* *(2006.01)*     *C12C 7/22* *(2006.01)*
*C12C 7/28* *(2006.01)*

(86) Internationale Anmeldenummer:
**PCT/EP2008/010984**

(87) Internationale Veröffentlichungsnummer:
**WO 2009/083205 (09.07.2009 Gazette 2009/28)**

(54) **VERFAHREN UND VORRICHTUNG ZUR BIERBEREITUNG**

METHOD AND DEVICE FOR THE PRODUCTION OF BEER

PROCÉDÉ ET DISPOSITIF DE PRODUCTION DE BIÈRE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **21.12.2007 DE 102007062948**
**16.07.2008 AT 11002008**

(43) Veröffentlichungstag der Anmeldung:
**15.09.2010 Patentblatt 2010/37**

(73) Patentinhaber: **Hertel, Katja**
**7500 St. Moritz (CH)**

(72) Erfinder: **Hertel, Marcus**
**deceased (AT)**

(74) Vertreter: **Kopp, Stephan et al**
**Kuhnen & Wacker**
**Patent- und Rechtsanwaltsbüro**
**Prinz-Ludwig-Strasse 40A**
**85354 Freising (DE)**

(56) Entgegenhaltungen:
EP-A- 0 161 806     EP-A- 0 363 023
DE-A1- 2 102 362     DE-A1- 2 515 451
DE-A1- 10 156 829     DE-A1- 19 619 289
DE-B1- 2 920 765     US-A- 4 212 895
US-A- 4 666 731

Bemerkungen:
Die Akte enthält technische Angaben, die nach dem Eingang der Anmeldung eingereicht wurden und die nicht in dieser Patentschrift enthalten sind.

EP 2 227 535 B1

## Beschreibung

Die Erfindung betrifft ein Verfahren zur Bierbereitung, wobei aus einer Maische eine Würze gewonnen, die Würze anschließend einer Temperaturbehandlung unterzogen, aus der behandelten Würze der Heißtrub abgeschieden, und nach der Heißtrubabscheidung aus der Würze durch eine Gärung Bier gewonnen wird. Die Erfindung beschäftigt sich insbesondere damit, wie die Ausbeute aus Hopfenprodukten im Zuge eines Bierbereitungsprozesses gesteigert werden kann. Die Erfindung betrifft darüber hinaus eine zur Durchführung des Verfahrens geeignete Vorrichtung.

Ein wesentlicher Kostenfaktor im Bierbereitungsprozess ist der Einsatz von Hopfenprodukten. Da die Preise für Hopfen in den letzten Jahren gestiegen sind, und auf dem Biermarkt ein immer stärkerer Preiskampf entstanden ist, wird die eingesetzte Hopfenmenge reduziert. Dadurch soll erreicht werden, dass die Herstellungskosten sinken und das resultierende Bier für einen geringeren Preis angeboten werden kann. Auf diese Weise wurde in den letzten Jahren der herbe Charakter einiger Biersorten schrittweise immer weiter verringert. Nicht zuletzt deswegen haben auch viele ursprüngliche Pilsbier-Brauereien inzwischen sogenannte "milde" Biere im Sortiment.

Der Ausnutzungsgrad des Hopfens im Zuge der Bierbereitung ist mit ca. 30 % bis heute sehr gering. Durch eine gezielte Steigerung der Einbringung von Hopfenbestandteilen in die Würze könnte der Einsatz an Hopfenprodukten, bei gleichbleibender Zusammensetzung des resultierenden Bieres, reduziert werden. Somit könnten Rohstoffkosten gespart und ein geringerer Verkaufspreis erzielt werden, ohne den Charakter eines Bieres zu verändern und die Qualität zu vermindern.

Welche Kostenersparnis eine nur um 3 % bessere Ausnutzung der Bitterstoffe im gesamten Brauprozess hat, soll in folgendem Beispiel erläutert werden: Um 35 mg/l Bitterstoffe im fertigen Bier zu erhalten, müssen bei einer 32%igen Bitterstoffausnutzung 10,94 g $\alpha$-Säuren / hl, die als Bestandteile des Hopfens zu den den Iso-$\alpha$-Säuren umgesetzt werden, dosiert werden. Bei einer 35%igen Bitterstoffausnutzung müssten nur 10 g $\alpha$-Säuren / hl in die Würze eingebracht werden. Beträgt die Jahresproduktion 500.000 hl, bedeutet dies eine Hopfeneinsparung von ca. 7 t. Bei einem Preis von 550 € je 100 kg Hopfen bedeutet dies eine jährlich finanzielle Einsparung von 38.500 €. Diese Berechnung bezieht sich auf den Ausnutzungsgrad über den gesamten Brauprozess, allerdings ist dieser auch maßgeblich vom Ausnutzungsgrad im Sudhaus abhängig.

Neben Wasser, Malz und Hefe ist der Hopfen in Deutschland eine weitere, durch das Reinheitsgebot vorgeschriebene Zutat zur Bierbereitung. Trotz der relativ geringen Menge, in der er der Würze zugegeben wird, besitzt er eine große Bedeutung für das Bier und dessen Herstellung. In der Regel werden Hopfeninhaltstoffe in verschiedenen Formen während der Würzekochung, beispielsweise durch einfache Zugabe oder durch Dosiervorrichtungen in das Bier eingebracht. Als Hopfenprodukte sind Rohhopfen, gemahlener Hopfen, Teile von Hopfen, Hopfenpellets sowie Hopfenextrakte bekannt. Während durch die Würzekochung unerwünschte Aromastoffe ausgetrieben werden, sind die meisten Hopfenkomponenten im Bier erwünscht und sollen, je nach Biertyp, in unterschiedlicher Höhe in die Würze und somit auch ins fertige Bier eingebracht werden.

Dokument DE 21 02 362 offenbart ein Verfahren zur Herstellung eines Iso-$\alpha$-Säureextraktes aus Hopfen, wobei man den Hopfen in Wasser rührt oder bewegt und die Zeit und die Temperatur der Behandlung so einrichtet, dass die $\alpha$-Säuren durch Bruch der Lupulindrüsen ohne Bildung von Iso-$\alpha$-Säuren im Wasser dispergiert werden. Zudem wird im wesentlichen das gesamte unerwünschte pflanzliche Material abgetrennt und dann die $\alpha$-Säuren in wässeriger Dispersion unter alkalischen Bedingungen erhitzt, um einen wässerigen Extrakt herzustellen. Dieser Extrakt enthält die Iso-$\alpha$-Säuren, die in Form ihrer Salze vorliegen können.

Dokument US 4,212,895 offenbart ein Verfahren zur Herstellung einer Iso-$\alpha$-Säure-Zubereitung, welches als Bierzusatz geeignet ist und keine Trübung verursacht. Dabei besteht das Verfahren im wesentlichen aus: (i) Extrahieren von Hopfen mit flüssigem $CO_2$ bei einer Temperatur im Bereich von -5 bis +20 °C, wobei der Druck etwas größer ist als der korrespondierende Dampfdruck des flüssigen $CO_2$ bei der Extraktionstemperatur. Hierdurch wird wenigstens ein Teil der $\alpha$-Säuren, welche im Hopfen enthalten sind, in das $CO_2$ extrahiert; (ii) Verdampfen des flüssigen $CO_2$ unter derartigen Bedingungen, dass das Extrakt nur mit denjenigen Teilen der Vorrichtung in Kontakt kommt, welche gegenüber dem Extrakt chemisch inert sind. Dabei wird ein erster Hopfenextrakt von hoher Reinheit gewonnen, welcher im wesentlichen aus $\alpha$-Säuren, $\beta$-Säuren, Hopfenöl und den nachfolgenden Verunreinigungen besteht: bis zu 3 % nicht charaktierisierte Weichharze; bis zu 0,5 % Hartharze; bis zu 0,5 % Tannine; bis zu 0,2 % Chlorophyll; bis zu 0,2 % Fette und Wachse; bis zu 0,5 % Feinanteile (Fines); und bis zu 0,5 % anorganische Salze. Dabei summieren sich die Verunreinigungen auf bis zu 4 %, und das Extrakt ist gelb; (iii) Herstellen einer wässerigen, alkalischen Lösung, welche das Extrakt enthält; und (iv) Kochen dieser Lösung, um im wesentlichen alle darin vorhandenen $\alpha$-Säuren in Iso-$\alpha$-Säuren umzuwandeln.

Die US-Patentschrift US 4,666,731 offenbart ein Verfahren zur Abtrennung der Komponenten eines $CO_2$-Hopfenextrakts, welches den Schritt des Rührens bzw. Mischens des $CO_{22}$-Hopfenextrakts mit einem Fraktionierungsmedium vorsieht, wobei das Medium im wesentlichen aus einer wässerigen Base besteht. Hierbei besteht keine Notwendigkeit, weitere Medien einzusetzen. Dabei ist die Lauge nicht höher konzentriert als ein äquimolares Äquivalent in Bezug auf die im Extrakt vorhandene $\alpha$-Säure und in einer Konzentration von wenigstens 3 %. Ferner weist das Verfahren den Schritt des Abtrennens der wässrigen $\alpha$-Säurelösung auf.

Die europäische Patentanmeldung EP 0 161 806 A2 offenbart ein Verfahren zum Bereitstellen eines Bittergeschmacks für Bier. Dabei umfasst das Verfahren die Schritte: Bereitstellen eines $CO_2$-Extrakts von Hopfen, welches $\alpha$-Säuren und $\beta$-Säuren enthält; Trennen der $\beta$-Säuren und $\alpha$-Säuren; Oxidieren der $\beta$-Säuren, um eine Mischung zu erzeugen, welche Hulupone enthält; und Einbringen der Hulupone in das Bier während seiner Herstellung.

Die deutsche Offenlegungsschrift DE 25 15 451 A1 offenbart ein Verfahren und eine Vorrichtung zum Kochen einer Brauereiwürze, bei welchen zur Herstellung von verschiedenen obergärigen oder untergärigen Biersorten die Würze am unteren Teil eines die Würze enthaltenen Kochgefässes oder Würzepfanne von allgemein zylindrischer Form entnommen wird, um sie einem äußeren Wärmetauscher oder Kalander zuzuführen. Dabei wird die Würze am Ausgang des Wärmetauschers für ihre Rückführung in die Würzepfanne entnommen und eine kontinuierliche Strömung in einem geschlossenen Strömungskreis zwischen der Würzepfanne und dem Wärmetauscher hergestellt. Hierdurch soll eine geeignete Behandlung erhalten werden, welche die Ausfällung stickstoffhaltiger Stoffe, die Zerstörung der Diastasen, die Sterilisierung und die Konzentration der Würze ermöglicht. Dabei erfolgt die Rückführung der Würze vom Ausgang des Wärmetauschers oder Kalanders aus in die Würzepfanne in einer angenähert zur zylindrischen Seitenwand derselben tangentialen Richtung an einer Stelle, welche erheblich niedriger als die freie Oberfläche der Würze in der Würzepfanne liegt.

Die deutsche Auslegeschrift DE 29 20 765 B1 offenbart ein Verfahren zur Herstellung eines isomerisierten Hopfenprodukts, wobei $\alpha$-Säuren enthaltende Hopfenprodukte, die gemahlene, gequetschte, gepresste oder geplatzte Lupulinkörner enthalten oder in Form von Extrakten vorliegen, mit Absorptionsmitteln versetzt werden, bei erhöhter Temperatur behandelt werden und das gebildete Isohumulon als trockene Substanz gewonnen wird. Bei diesem Verfahren wird die Behandlung in einem geschlossenen Druckbehälter unter gleichzeitiger Anwendung von $CO_2$ bei dessen überkritischer Temperatur und bei 50 bis 600 bar durchgeführt.

Die europäische Patentanmeldung EP 0 363 023 A1 offenbart ein Verfahren zur Herstellung einer isomerisierten Hopfen-Zubereitung. Dabei wird Hopfenextrakt mit einem festen Alkali- oder Erdalkali-Metallsalz gemischt und die daraus resultierende Mischung einer Temperatur von wenigstens 80 °C für einen Zeitraum ausgesetzt, der ausreichend ist, um die Umwandlung der Säure in die Iso-$\alpha$-Säure zu bewirken.

Die deutsche Offenlegungsschrift DE 101 56 829 A1 offenbart ein Verfahren zur optimierten Herstellung von Bierwürze, umfassend Schroten des Malzes oder möglicher anderer Extraktquellen und Extrahieren mittels Wasserzugabe, wobei die extrakthaltige Würzelösung von unlöslichen Rückständen des Malzes, den Trebern, durch Filtration oder Abläutern getrennt wird. Anschließend wird die Würzelösung mit Hopfen gekocht und die Hopfentreber und eiweißhaltigen Ausscheidungen abgetrennt. Dabei wird mindestens während der Anfangsphase des Maischens die sich bildende Maische einer Ultraschallbehandlung unterzogen oder ausgesetzt, wobei der Energieeintrag im Bereich von $\geq$ 4 kJ/kg Maische, insbesondere bei $\geq$ 20 kJ/kg Maische, liegt.

Die deutsche Offenlegungsschrift DE 196 19 289 A1 offenbart ein Verfahren zum Aufheizen der Würze bei der Bierherstellung in einer Würzepfanne bzw. einem Würzevorlaufgefäß, jeweils mit Innenkocher, inbesondere Röhreninnenkocher. Dabei wird die Würze vor der Hopfengabe zur Umwälzung aus der Würzepfanne bzw. dem Vorlaufgefäß abgezogen und unterhalb des Innenkochers wieder eingeführt. Die Umwälzung der Würze wird unter teilweiser Benutzung der vorhandenen Hopfengabeeinrichtung, einschließlich der Hopfengabepumpe, über Teile der Zuführungsleitung der Hopfengabeeinrichtung durchgeführt. Darüberhinaus wird eine Vorrichtung zum Würzekochen bei der Bierherstellung in einer Würzepfanne bzw. einem Vorlaufgefäß, jeweils mit Innenkocher, insbesondere Röhreninnenkocher, mit Hopfengabeeinrichtung zur Durchrührung des vorstehend beschriebenen Verfahrens offenbart. Dabei mündet die Zuführungsleitung zur Hopfengabe in die Würzepfanne bzw. in das Vorlaufgefäß unterhalb des Innenkochers ein. Ferner liegt innerhalb der Hopfengabeeinrichtung eine Überbrückungsleitung vor, die eine Würzeweiterleitung zur Würzepfanne bzw. zum Vorlaufgefäß ohne Einbeziehung der Hopfengefäße ermöglicht.

Aufgabe der Erfindung ist es, ein Verfahren und eine Vorrichtung zur Bierbereitung wie eingangs genannt anzugeben, womit sich die Ausbeute der Hopfenprodukte bei der Bierbereitung erhöhen lässt.

Die auf ein Verfahren gerichtete Aufgabe wird dabei für ein Verfahren der eingangs genannten Art erfindungsgemäß dadurch gelöst, dass während des Brauprozesses ein, insbesondere wässriges, Fluid separat mit einem Hopfenprodukt versetzt und zur Isomerisierung der Bitterstoffe erhitzt wird, und dass das derart vorbehandelte Fluid anschließend der Würze zugeführt wird.

Unter dem Begriff Würze sollen dabei alle Flüssigkeiten während des Brauprozesses zwischen der Maischebereitung und der Gärung inklusive der Nachgärung bzw. Lagerung verstanden werden. So werden insbesondere auch Folgebezeichnungen wie beispielsweise Jungbier und dergleichen von dem hier verwendeten Begriff umfasst.

In einem ersten Schritt geht die Erfindung dabei von der Tatsache aus, dass die wichtigsten Inhaltsstoffe des Hopfens, die für die spätere Bitterkeit der Biere sorgen, die erwähnten $\alpha$-Säuren sind. Zwar stellen per Definition die Gesamtharze des Hopfens die Summe aller Bitterstoffe dar, und es spielen bei der Bitterkeit auch andere Hopfeninhaltsstoffe, wie beispielsweise $\beta$-Säuren, eine geringe Rolle, jedoch ist dieser Anteil vernachlässigbar gering, weswegen im Folgenden exemplarisch nur auf die $\alpha$-oder iso-$\alpha$-Säuren als Bitterstoffe eingegangen wird. Die beschriebenen Mechanismen und Vorteile sind jedoch auch auf die β-Säuren übertragbar.

Die α-Säuren werden bei der Bierbereitung in ihre isomerisierte Form, die Iso-α-Säuren, überführt. Über Hopfenprodukte werden der Würze α-Säuren zugeführt und in ihr gelöst. Die α-Säuren werden dann durch die hohen Temperaturen bei der Kochung in ihre isomerisierte Form überführt.

Diese Umwandlung folgt einer Reaktion erster Ordnung. Die mittleren Reaktionskonstanten $k_1$ für den Verlust an α-Säuren und demzufolge für die Bildung der Iso-α-Säuren während der Würzekochung bei den entsprechenden Temperaturen werden bekanntermaßen wie folgt angegeben:

$$k_{1_{\alpha-Säuren\,(90°C)}} = 0,0083 \; \frac{1}{min} \; ; \; k_{1_{\alpha-Säuren\,(100°C)}} = 0,0136 \; \frac{1}{min} \; ; \; k_{1_{\alpha-Säuren\,(110°C)}} = 0,0354 \; \frac{1}{min}$$

Die Endprodukte dieser Isomerisierung können in der cis- und in der trans-Form vorliegen. Das Verhältnis der Stereoisomere ist für alle Würzen nahezu konstant. Die cis-Form tritt zu 65% und die trans-Form zu 35% auf. In der isomerisierten Form erhalten diese Stoffe einen deutlich bittereren Charakter. Für die unterschiedlichen Stereoisomere ist zwar eine gering differierende Bitterkeit im fertigen Bier gemessen worden, jedoch ist diese Differenz nicht für die Praxis relevant. Die isomerisierten α-Säuren werden auch als die Gruppe der Isohumulone bezeichnet. Diese sind die Stoffe des Hopfens, die hauptsächlich für das Entstehen einer Bitterkeit verantwortlich sind. Die Iso-α-Säuren bestehen aus Iso-Humulon, Iso-Co-Humulon, Iso-Ad-Humulon, Iso-Post-Humulon und Iso-Prä-Humulon. Diese unterscheiden sich lediglich gering im Aufbau einer Seitenkette ihrer Moleküle. Andere Substanzen des Hopfens, wie beispielsweise β-Säuren, spielen nur eine untergeordnete Rolle bei der Bitterkeit eines Bieres. Des Weiteren haben Iso-Humulone eine positive Wirkung auf den Bierschaum. Sie reichern sich in ihm an und stabilisieren diesen. Eine nähere Betrachtung der Hopfenbitterstoffe sowie der Isomerisierungsvorgänge kann dem Buch "Chemistry and Analysis of Hop and Beer Bitter Acids" (Developments in Food Science) von M. Verzele und D. Keukeleire, gebundene Ausgabe: 418 Seiten, Elsevier-Verlag (4. Dezember 1991), ISBN-10: 0444881654, ISBN-13: 978-0444881656, entnommen werden.

In einem zweiten Schritt erkennt die Erfindung, dass sich die geringe Ausbeute an Hopfenbitterstoffen vor allem dadurch erklären lässt, dass ein Großteil der α-Säuren nicht in Lösung geht, beziehungsweise nicht ausreichend isomerisiert wird. Sowohl die Lösung als auch die Isomerisierung von α-Säuren ist ein von Zeit und Temperatur abhängiger Vorgang. Je höher die Temperatur ist, umso schneller gehen Isomerisierungsvorgänge vonstatten. Dies kann auch den angegebenen Reaktionskonstanten entnommen werden.

Zur Lösung dieses Problems geht die Erfindung nun von den folgenden Überlegungen aus:

Die maximale Lösung von Bitterstoffen, also Iso-α-Säuren beziehungsweise α-Säuren, ist durch das Flüssig-Flüssig-Gleichgewicht der Substanzen in Wasser physikalisch begrenzt. Weiter ist eine maximal mögliche Lösung der Hopfenbitterstoffe vom pH-Wert der Würze abhängig. Es können umso mehr Hopfenbitterstoffe in Würze beziehungsweise Wasser gelöst werden, je höher der pH-Wert ist.

Darüber hinaus weisen die α-Säuren in ihrer isomerisierten Form eine deutlich höhere maximale Löslichkeit auf. So liegt die Löslichkeit der α-Säuren bei einem pH-Wert von 5,2 bei 84 mg pro Liter. Die Löslichkeit der Iso-α-Säuren liegt bei demselben pH-Wert bereits bei dem mehr als 10-fachen Wert. Bei höheren pH-Werten steigt die maximale Löslichkeit noch weiter stark an, so dass bei einer weiteren Erhöhung des pH-Wertes um nur 0,7 bereits die Löslichkeit der α-Säuren, die generell eine geringere Löslichkeit aufweisen als die iso-α-Säuren, auf ca. 480 mg pro Liter angestiegen ist.

Im Braubereich können zwei große Felder, in denen die Ausbeuteverluste auftreten, unterschieden werden: der Heißbereich, also die Würzebereitung, und der Kaltbereich, also der Bereich der Gärung, Lagerung, Filtration und Abfüllung. Während im Kaltbereich 20% Verluste auftreten, werden bei der Würzebereitung bereits 50% der zudosierten Hopfenbitterstoffe wieder ausgeschieden beziehungsweise erst gar nicht in die Würze eingebracht.

Werden die Hopfenprodukte, beziehungsweise die α- oder Iso-α-Säuren, im Zuge der Würzebereitung nicht gleichmäßig in der Würze verteilt, so kann es vorkommen, dass an einigen Stellen in der Würze Iso-α-Säuren beziehungsweise α-Säuren lokal über ihrer maximalen Löslichkeit vorliegen, während an anderen Stellen in der Würze nahezu keine α- oder Iso-α-Säuren vorliegen. Aufgrund der begrenzten Zeit, die für eine Temperaturbehandlung der Würze zur Verfügung steht, ist eine gleichmäßige Verteilung der Hopfenprodukte bzw. der Bitterstoffe in der gesamten Würze oftmals nicht möglich. Dies führt zu der Tatsache, dass, obwohl die Gesamtmenge an Bitterstoffen bei homogener Vermischung in der gesamten Würzemenge löslich wäre, nicht alle Bitterstoffe in Lösung gehen können und somit für den weiteren Brauprozess und schließlich das fertige Bier verloren sind. Darüber hinaus ruft eine mangelnde Homogenisierung der Bitterstoffe in der Würze auch eine verringerte Isomerisierung hervor, da nicht alle Bitterstoffmoleküle vollständig von Wasser umgeben sind. Hinzu kommt, dass die Bitterstoffe - gerade bei Verwendung von feststoffreichen Hopfenprodukten wie Pellets, aber aufgrund der Harzeigenschaften auch bei Extrakten - erst aus dem Hopfenprodukt in die Würze extrahiert werden müssen. Dieser Vorgang entspricht einer Fest-Flüssig-Extraktion und unterliegt somit auch deren Gesetzmäßigkeiten. Mit dem 1.FICKschen Gesetz können die entscheidenden Parameter benannt werden, welche die Vorgänge der Fest-Flüssig-Extraktion bestimmen, bzw. evtl. beschleunigen. So nimmt die pro Zeiteinheit ausgetauschte Stoffmenge - in diesem Fall sind hierunter die gewünschten $\alpha$- oder Iso-$\alpha$-Säuren zu verstehen - zu, wenn jeweils der Diffusionskoeffizient, die Fläche des Diffusionsweges und das örtliche Konzentrationsgefälle wachsen. Der Diffusionskoeffizient ist hierbei proportional zur Temperatur und indirekt proportional der dynamischen Zähigkeit und dem hydrodynamischen Radius eines kugelförmigen Teilchens. Die Extraktionszeit vom Eindringen des Extraktionsmittels (hier der Würze) in ein Feststoffkorn (hier das Hopfenprodukt) bis zum Konzentrationsausgleich hängt maßgeblich von der Kappilar-oder Weglänge ab, die das Lösungsmittel im Feststoff, hier also die Würze im Hopfenprodukt, zurücklegen muss. Damit wird deutlich, dass eine schnelle und vollständige Extraktion der Bitterstoffe nur zu erreichen ist, wenn der Würze große Austauschflächen mit dem und kurze Kapillarwege in dem Hopfenprodukt angeboten werden. Darüber hinaus ist es für eine gute Extraktion von Vorteil, wenn immer wieder "frische", also keine oder nahezu keine Bitterstoffe enthaltende, Würze mit dem Hopfenprodukt in Kontakt kommt, um das Konzentrationsgefälle und somit die Extraktion aus dem Hopfenprodukt auf ein Maximum zu erhöhen. Dies ist bei konventioneller Hopfengabe aufgrund der - unter Umständen ungleichmäßigen und langsamen - Verteilung der Bitterstoffe in der Würze nicht realisierbar. Bei einer direkten Zugabe eines Hopfenproduktes in die gesamte Würze kommt es zwangsläufig immer dazu, dass sich ein Gleichgewicht zwischen den Bitterstoffen im Hopfenprodukt und den in der Würze gelösten einstellt. Gleiches gilt auch bei Verwendung gängiger Dosiervorrichtungen. Nach Erreichen dieses Gleichgewichtszustandes gibt es kein treibendes Konzentrationsgefälle mehr, so dass keine weiteren Bitterstoffe aus dem Hopfenprodukt in die Würze übergehen. Eine vollständige Extraktion der Bitterstoffe aus einem Hopfenprodukt ist somit bei einer direkten Zugabe eines Hopfenproduktes in die gesamte Würze nicht möglich.

Auch ist es zur Erhöhung des Diffusionskoeffizienten von Vorteil, die Temperatur bei der Extraktion möglichst hoch zu halten, was jedoch aufgrund einer noch näher beschriebenen thermischen Belastung der Würze nicht vorteilhaft und bei atmosphärischen Würzekochsystemen nicht möglich ist. Es ist folglich ersichtlich, dass eine Hopfengabe zur gesamten Würze, wie sie heutzutage durchgeführt wird, nur zu einer unzureichenden Extraktion der Bitterstoffe in die Würze führen kann, woraus noch zusätzlich der mangelnde Ausnutzungsgrad resultiert. In der Praxis ist dies an dem hohen Gehalt an Bitterstoffen, welchen die Hopfenrückstände bei konventioneller Hopfengabe noch enthalten, ersichtlich.

Bei den gängigen Kochzeiten kommt es ferner auch dazu, dass bei den vorliegenden Kochtemperaturen sowohl die Lösung bzw. die Extraktion, aber vor allem auch die Isomerisierung von Hopfenbestandteilen, nicht ausreichend vonstatten gehen kann. Da die Isomerisierung von Bitterstoffen den Gesetzen der Reaktionskinetik unterliegt, ist die zur vollständigen Isomerisierung der zudosierten Bitterstoffe benötigte Reaktionszeit bei einer gegebenen Temperatur und einem gegebenen pH-Wert von der Reaktionskonstante abhängig und kann nicht weiter reduziert werden. Hierbei bedingt eine mangelnde Isomerisierung auch, dass die maximale Löslichkeit der Bitterstoffe stark vermindert ist (s.o.). Längere Koch- oder Heißhaltezeiten würden zwar eine höhere Isomerisierung und Lösung hervorrufen, allerdings wird hierdurch auch die thermische Belastung der Würze stark ansteigen, was vor allem bei gleichbleibenden Gesamtverdampfungen zu geschmacklichen Beeinträchtigungen führt. Einer Erhöhung der Gesamtverdampfung steht der damit verbundene Energieaufwand entschieden entgegen. Eine Erhöhung der Kochtemperatur, welche zu einer Erhöhung der Reaktionsgeschwindigkeit führen würde, ist bei atmosphärisch betriebenen Würzepfannen aufgrund des vorgegebenen Umgebungsdruckes nicht möglich. Eine Erhöhung der Kochtemperatur bei gängigen Kochzeiten würde darüber hinaus zu derselben geschmacklichen Beeinträchtigungen führen wie eine längere Kochzeit. Darüber hinaus haben Versuche gezeigt, dass der Dampf-Flüssigkeits-Verteilungsfaktor bei höheren Temperaturen für die meisten Aromastoffe stark abnimmt, so dass die Austreibung dieser Stoffe - bei gleich bleibenden Gesamtverdampfungen - verringert werden würde, was noch zusätzlich zu einem Fehlgeschmack führen kann.

Laut Literatur [Mallowicki, M.G., Shellhammer, T.H.: Isomerization and Degradation Kinetics of Hop (Humulus Lupulus) Acids in a Model Wort-Boiling System, J. Agr. Food Chem. 2005, 53, 4434-4439] haben Versuche gezeigt, dass eine Temperaturbehandlung von $\alpha$-Säuren in einer schwach alkoholischen Lösung neben der Bildung von Iso-$\alpha$-Säuren auch zu deren Abbau bzw. einer Umwandlung zu Folgeprodukten führte. Dieser Abbau unterliegt ebenfalls einer Reaktion erster Ordnung und ist mit den Gesetzmäßigkeiten der Reaktionskinetik zu beschreiben. Die Reaktionskonstanten dieser Umwandlung sowie die Gesetzmäßigkeiten der Reaktionskinetik der ablaufenden Reaktionen können der angegebenen Literatur entnommen werden. Es ist deshalb denkbar, dass sich ein Teil der gebildeten Iso-$\alpha$-Säuren auch in Würze zu Folgeprodukten abbaut, was noch zusätzlich zum schlechten Ausnutzungsgrad der Bitterstoffe im Zuge der Würze- bzw. Bierbereitung beitragen kann. Eigene Versuche der Heißhaltung einer hochdosierten, wässrigen Iso-$\alpha$-SäureLösung (>200 mg/l) bei Temperaturen von 120 °C über einen Zeitraum von 4 Stunden, haben jedoch zu keinem signifikanten Abbau der Iso-$\alpha$-Säuren geführt. Hieraus kann geschlossen werden, dass diese Umwandlung bei den pH-Werten von Würze oder Wasser bzw. den bei den Versuchen vorliegenden Mischungen mit $\alpha$- oder Iso-$\alpha$-Säuren zu vernachlässigen ist und erst bei deutlich höheren pH-Werten, Temperaturen und/oder dem Vorliegen von Alkohol zum Tragen kommt. Gerade das Vorliegen von Alkohol könnte bei hohen Temperaturen zu einer vermehrten Estherbildung führen.

Die Hopfenbestandteile, die trotz allem in die Würze eingebracht wurden, können sich im weiteren Zuge der Würzebereitung auch an Eiweiße oder andere Trubstoffe binden, so dass sie bei der Heißtrubabscheidung aus der Würze wieder entfernt werden und folglich auch nicht mehr in das fertige Bier eingebracht werden können. So sind alleine 30 - 50 % der Verluste an zudosierten Bitterstoffen auf eine Adsorption und spätere Ausscheidung am Trub zurückzuführen.

Aus den genannten Verlusten resultiert zusammen mit den weiteren Verlusten, die im Kaltbereich entstehen, der geringe Ausnutzungsgrad des Hopfens. Die Verluste im Kaltbereich resultieren vor allem aus der Adsorption und späteren Ausscheidung am durch den Temperaturabfall entstehenden Kühltrub oder an den Hefezellen, aber auch zu geringen Teilen durch die Adsorption am Filtermaterial. Darüber hinaus kommt es aufgrund des pH-Sturzes bei der Gärung auch zu einer Abscheidung bereits in der Würze gelöster und nicht adsorptiv gebundener Bitterstoffe. Hierbei handelt es sich aufgrund ihrer Hydrophobizität und ihrer geringen Löslichkeit fast ausschließlich um unisomerisierte $\alpha$-Säuren. Dies ist darauf zurückzuführen, dass die maximale Löslichkeit der $\alpha$-Säuren (s.o.) mit fallenden pH-Werten stark abnimmt. Die $\alpha$-Säuren befinden sich nach dem pH-Sturz folglich in ihrer Konzentration wieder oberhalb ihrer Löslichkeitsgrenze in Würze / Wasser und fallen demzufolge wieder aus. Ihre Isomerisierungsprodukte hingegen weisen auch bei geringeren pH-Werten noch eine relativ hohe Löslichkeit auf (s.o.) und verbleiben somit auch nach dem pH-Sturz noch in der Würze. Bei gängigen Brauverfahren liegt der Anteil an unisomerisierten $\alpha$-Säuren an den in der Würze gelösten Bitterstoffen teilweise bei deutlich über 25 %, so dass diese Bitterstoffe im Zuge der Gärung zwangsläufig nahezu vollständig wieder verloren gehen. Bei einer Erhöhung der Isomerisierungsanteils der gelösten Bitterstoffe auf über 75 %, könnten diese Verluste zumindest teilweise, bei einem vollständigen Isomerisierungsanteil vollkommen vermieden werden.

Im Rahmen des erfindungsgemäßen Verfahrens zur Bierbereitung wird aus einer Maische eine Würze gewonnen, die Würze anschließend einer Temperaturbehandlung unterzogen, aus der behandelten Würze der Heißtrub abgeschieden und nach der Heißtrubabscheidung aus der Würze durch eine Gärung Bier gewonnen. Dabei wird zur Erhöhung der Hopfenausbeute während des Brauprozesses ein Fluid separat mit einem Hopfenprodukt versetzt und zu einer Isomerisierung der Bitterstoffe erhitzt. Das Fluid ist Wasser, Dampf oder Würze und wird auf eine Temperatur oberhalb der von der Würze während der Temperaturbehandlung erreichten Temperatur erhitzt.

Hierdurch kommt es zu einer verbesserten Isomerisierung sowie einer besseren Lösung der Bitterstoffe und einer Erhöhung des Isomerisierungsanteils der gelösten Bitterstoffe bei in der Regel gleichbleibenden oder verkürzten Erhitzungszeiten. Eine Kochung hat hierbei den Vorteil, daß aufgrund der Bewegung in der Flüssigkeit eine gute Homogenisierung des Fluids mit dem zugesetzten Hopfenprodukt hervorgerufen wird. Die Isomerisierung wird somit nicht durch die zur Bierbereitung erfolgte Temperaturbehandlung der Würze als solche, beispielsweise in einer Würzepfanne, sondern durch eine hiervon getrennte, separate Erhitzung durchgeführt. Durch eine Zuführung dieser Mischung des Fluids mit den Hopfenkomponenten, d.h. des derart vorbehandelten Fluids, kommt es zu einer besseren Einbringung der Bitterstoffe in die gesamte Würze, was letztendlich zu einem deutlich höherem Ausnutzungsgrad der verwendeten Hopfenprodukte und somit zu einer Reduzierung der benötigten Menge an Hopfen führt.

Bei der herkömmlichen Bierbereitung ist die Isomerisierung von Bitterstoffen ein die Temperaturbehandlung der Würze, insbesondere die Kochzeit, limitierender Faktor. Durch die Erfindung ist es erstmalig möglich, die Kochzeit der Würze bzw. die Zeit ihrer Temperaturbehandlung weiter zu verkürzen, wodurch sich neben geschmacklichen auch energetische Vorteile ergeben können.

Dabei begünstigt ein höherer pH-Wert und somit eine höhere Konzentration an OH$^-$-Ionen die Isomerisierung der $\alpha$-Säuren. Das Verfahren wird problemlos während des Brauprozesses und insbesondere während der Würzekochung parallel oder zeitnah zu dieser durchgeführt.

Somit wird eine zu starke Umwandlung bzw. Oxidation der entstandenen Iso-$\alpha$-Säuren oder weiterer Hopfenbestandteile, beispielsweise durch Lagerung, vermieden. Als zeitnah wird insofern die Vorbehandlung des Fluids mit dem Hopfenprodukt während des Sud-Tages verstanden. Die Erhitzung des Fluids kann dabei diskontinuierlich, also chargenweise, oder kontinuierlich in einem Durchlaufverfahren vorgenommen werden.

Die Vorrichtung zur Durchführung des Verfahrens bzw. der in ihr enthaltene Heizbehälter kann dabei sowohl außerhalb als auch innerhalb bestehender Brauereianlagen oder Leitungen angeordnet sein.

Die Zuführung des vorbehandelten Fluids in die Würze kann an unterschiedlichen Stellen oder Zeitpunkten durch geeignete Vorrichtungen im Sudhaus erfolgen, auf welche später insbesondere am Beispiel der Verwendung eines Würzeteilstroms als Fluid noch näher eingegangen wird. Die dort aufgeführten Rückführungsvarianten gelten selbstverständlich auch für die Verwendung anderer Fluide. Dadurch, dass die Bitterstoffe nun in ihrer isomerisierten Form vorliegen, weisen sie die oben beschriebene höhere Löslichkeit auf, wodurch sie leichter und in größerer Menge in die Würze eingebracht werden können, was letztendlich dazu führt, dass der Ausnutzungsgrad stark gesteigert wird.

Dadurch, dass das vorbehandelte Fluid - wie später noch ausführlich beschrieben - auch erst an späteren Stellen im Produktionsprozess wieder der restlichen Würze zugeführt werden kann, kann in diesem Fall problemlos auch eine längere Isomerisierungsdauer in Kauf genommen werden. Ein Vorteil einer niedrigeren Isomerisierungstemperatur und somit einer längeren Isomerisierungsdauer könnte sein, dass sich das Verhältnis der Reaktionskonstante der Isomerisierung zu der eines möglichen Abbaus der gebildeten Isomerisierungsprodukte erhöht, also zugunsten der Isomerisierungskonstante zunimmt, wodurch eine höhere Endkonzentration an Iso-$\alpha$-Säuren erzielt werden könnte. Die beschriebenen Versuche der Temperaturbehandlung von $\alpha$- bzw. Iso-$\alpha$-Säuren in einer schwach alkoholischen Lösung geben für diesen Fall darauf Hinweis.

Das Fluid wird auf eine Temperatur oberhalb der von der Würze während der Temperaturbehandlung erreichten Temperatur erhitzt. Dabei wird Bezug darauf genommen, dass bei bisher üblichen Bierbereitungen die Isomerisierung während der Temperaturbehandlung der Würze erfolgt, was den Ausnutzungsgrad limitiert. Durch eine Erhöhung der Temperatur während der separaten Erhitzung des insbesondere wässrigen Fluids kann der Isomerisierungsgrad deutlich verbessert werden. Einschränkungen, wie sie bei der Temperaturbehandlung der Würze vorliegen, gibt es nicht.

Um die gesamte Menge an eingebrachten Hopfenprodukten in Kontakt zum Fluid zu bringen, und um lokale, die Löslichkeit beeinflussende Konzentrationsunterschiede zu vermeiden, empfiehlt es sich, das Fluid mit dem Hopfenprodukt homogen zu vermischen. Eine Homogenisierung der Mischung kann beispielsweise durch ein Umpumpen oder Rühren während des Heißhaltens erfolgen. Auch können zur Homogenisierung Ultraschall oder Vibrationen eingebracht werden. Darüber hinaus kann eine Homogenisierung durch ein Ein- bzw. Durchleiten von Gasen oder Dämpfen hervorgerufen werden.

Darüber hinaus empfiehlt es sich, den verwendeten Behälter zur Vermeidung von Verlusten im Anschluss an die Behandlung leer zu drücken bzw. diesen zu spülen. Dies kann beispielsweise durch eine Flüssigkeit oder durch entsprechende Stempel geschehen. Diese Stempel können auch dazu genutzt werden, das Hopfenprodukt zu pressen, um es zumindest teilweise zu entfluidisieren und somit noch bitterstoffreiches Fluid zu gewinnen. Darüber hinaus empfiehlt es sich gerade bei Verwendung von feststoffreichen Hopfenprodukten und/oder bei einer Rückführung zu späteren Stellen im Brauprozess, vor der Rückführung des Fluides zur restlichen Würze eine später noch beschriebene Fest-Flüssig-Trennung durchzuführen. Besonders vorteilhaft ist es auch, eine - später noch ausführlich dargestellte - Fest-Flüssig-Extraktion oder eine Hochdruckextraktion durchzuführen, um somit das Maximum an Bitterstoffen aus dem Hopfenprodukt extrahieren zu können. Auch ist es denkbar, diese Extraktion der Bitterstoffe aus dem Hopfenprodukt in ein Fluid vor dem eigentlichen Isomerisierungsprozess bzw. währenddessen durchzuführen. Um die Fest-Flüssig-Extraktion zu beschleunigen, können - wie später beschrieben - mehrere Apparaturen verwendet werden - insbesondere diejenigen, welche während der Isomerisierung der Homogenisierung dienen.

Gerade bei Durchführung einer der Isomerisierung nachgeschalteten Extraktion kann die Isomerisierung der Bitterstoffe auch im eigentlichen Hopfenprodukt stattfinden. Zur Isomerisierung ist es nämlich nicht zwangsläufig notwendig, dass die Bitterstoffe vorher aus dem Hopfenprodukt gelöst werden müssen. Dies bedeutet, dass die benötigte Menge an zugeführtem Fluid auf eine absolutes Minimum verringert werden kann. Da für die Isomerisierung eines Mols $\alpha$-Säure nur ein "Mol" OH$^-$-Ion und demzufolge beispielsweise nur ein Mol Wasser benötigt wird, reicht es im Extremfall und bei ausreichender Homogenisierung aus, lediglich eine identische Molmenge an Wasser dem Hopfenprodukt zuzugeben. Gleiches gilt für andere Fluide - unter Berücksichtigung ihrer OH$^-$-Ionen-Anzahl. Da die Molmasse von $\alpha$-Säure in der Regel deutlich größer ist als diejenige der zuzugebenden Fluide, hier vor allem Wasser, kann im Idealfall auch eine geringere Menge (Masse) an Fluid als an Hopfenprodukt zur Isomerisierung der Bitterstoffe zugegeben werden. Eine weitgehende Isomerisierung der Bitterstoffe im Hopfenprodukt kann nicht nur zu energetischen und geschmacklichen Vorteilen, sondern auch zu geringeren Investitionskosten führen, da durch die geringere benötigte Menge an Fluid auch der Heizbehälter, der für die Isomerisierung verwendet wird, kleiner ausgestaltet sein kann. Hierdurch kann auch vermieden werden, dass er unter die Druckgeräterichtlinie fällt. So kann sein Volumen in den meisten Fällen deutlich unter 1/100 des Volumens des Behälters zur Temperaturbehandlung der Würze liegen.

Vorteilhafterweise ist der pH-Wert des verwendeten Fluids größer als 5. Hierdurch wird gewährleistet, dass für die Isomerisierung der $\alpha$-Säuren genügend OH$^-$-Ionen zur Verfügung stehen. Insbesondere kann auch eine Lauge mit einem pH-Wert von mehr 7 verwendet werden. Durch den im Vergleich zur restlichen Würze geringen Anteil ergeben sich dadurch für das Endprodukt keine Nachteile. Auch kann es für ein Leerdrücken oder Spülen des Behälters und vor allem im Falle der Durchführung einer gezielten Fest-Flüssig-Extraktion von Vorteil sein, für den Spül- oder Extraktionsprozess ein abweichendes Fluid, in welchem sich die Bitterstoffe besser lösen lassen, zu verwenden. Dies kann beispielsweise Alkohol sein. Um dem Reinheitsgebot zu entsprechen, empfiehlt sich hier auch die Verwendung eines - nur wenig gehopften, aber vorzugsweise stark alkoholhaltigen - Bieres. Gerade bei der Verwendung von Laugen zur Isomerisierung kann die nachgeschaltete Fest-Flüssig-Extraktion auch unter Säuerung bzw. Verwendung von Säuren erfolgen, um eine Neutralisation zu erreichen oder gegebenenfalls eine Umwandlung der gebildeten Isomerisierungsprodukte zu mindern. Die Verwendung eines anderen Fluides ergibt sich natürlich auch bei Durchführung einer Hochdruckextraktion.

Für einen möglichst hohen Isomerisierungsgrad wird das Fluid auf eine Temperatur oberhalb der atmosphärischen Kochtemperatur (für Wasser bei Normalbedingungen sind dies 100°C) für eine Dauer zwischen 5 und 90 Minuten erhitzt. Je nach Höhe der gewählten Temperatur und abhängig vom pH-Wert lässt sich innerhalb der angegebenen Dauer, die deutlich unter einer heute üblichen Würzekochzeit liegen kann, eine nahezu vollständige bzw. optimale Isomerisierung erzielen.

Um in einem geforderten Zeitintervall eine optimale Isomerisierung zu erzielen, ist es von Vorteil, die Temperatur derart einzustellen, dass sich in dem Zeitraum der Isomerisierung eine nahezu vollständige bzw. optimale Umwandlung der $\alpha$-Säuren in die korrespondierenden Iso-$\alpha$-Säuren ergibt. Diese Temperatur kann bei Kenntnis der Reaktionskonstanten mit den Gesetzen der Reaktionskinetik ermittelt werden. Gegebenenfalls ist hier ein möglicher Abbau der gebildeten Iso-$\alpha$-Säuren zu berücksichtigen. Hierfür können die hier sowie in der aufgeführten Literatur angegebenen Reaktionskonstanten verwendet werden. Durch diese Verfahrensweise ist sichergestellt, dass der größtmögliche Anteil der zudosierten $\alpha$-Säuren in Form von Iso-$\alpha$-Säuren in die Würze bzw. ins fertige Bier eingebracht werden kann. Somit kann eine maximale Ausnutzung der zugesetzten Hopfenprodukte erzielt werden, ohne hierbei unnötig viel Energie für die Isomerisierung zuzuführen. Soll eine optimale Isomerisierung beispielsweise in der Zeit ablaufen, welche für die gängige Temperaturbehandlung der restlichen Würze benötigt wird (30 - 60 min.), so ergibt sich eine Temperatur zwischen 110 und 140 °C.

Wird gemäß einer weiter bevorzugten Ausgestaltung der Erfindung als wässriges Fluid ein Würzeteilstrom verwendet, so entspricht dieses Verfahren auch dem Deutschen Reinheitsgebot bzw. dem vorläufigen Biergesetz. Ein dem Reinheitsgebot entsprechendes Hopfenprodukt wird nämlich, wie bei herkömmlichen Verfahren auch, mit der Würze gekocht, um eine Isomerisierung zu erreichen. Dies ist vor allem bei der Verwendung von Extrakten oder Auszügen nötig, da hier das vorläufige Biergesetz den möglichen Zugabezeitpunkt auf den Bereich vor Beginn oder während der Kochung der Würze eingrenzt. Eine geschmackliche Beeinträchtigung durch höhere Kochtemperaturen kann aufgrund der Verwendung nur eines geringen Teilstromes vernachlässigt werden.

Hierzu wird insbesondere im Anschluss an die Fest-Flüssig-Trennung beziehungsweise vor der Würzekochung ein Strom der Würze nicht in die Würzepfanne sondern in einen separaten Behälter geführt. Während die restliche Würze in der Würzepfanne gekocht oder heiß gehalten wird, erfolgt ein Teil oder die gesamte Hopfengabe zu dem abgezogenen Teilstrom in den separaten Behälter. Die Würze wird zusammen mit den Hopfenprodukten vorteilhafterweise auf Temperaturen über 100°C erhitzt und auf diesen Temperaturen für eine vorgegebene Dauer gehalten. Der Behälter kann hierfür abgeschlossen werden. Durch die hohen Temperaturen wird erreicht, dass die Isomerisierungsrate bzw. -geschwindigkeit stark erhöht wird. Dies führt letztendlich dazu, dass, während die restliche Würze gekocht wird, nahezu alle $\alpha$-Säuren in ihre isomerisierte Form überführt werden. Nachdem der Isomerisierungsprozess zu einem gewünschten Grad abgeschlossen ist, wird der Teilstrom wieder der übrigen Würze zugeführt.

Da in dem abgezogenen Teilstrom der Würze, bedingt durch die höheren Temperaturen oder gegebenenfalls auch durch längere Heißhaltezeiten, auch eine stärkere Nachbildung an unerwünschten Aromastoffen stattfinden kann, empfiehlt es sich die Menge des abgezogenen Teilstromes auf ein notwendiges Minimum zu beschränken. Aufgrund der Tatsache, dass der oben beschriebene Extremfall der minimal benötigten Flüssigkeitsmenge einem Idealfall entspricht, ergibt sich dieses Minimum in der Regel daraus, dass für eine vollständige Isomerisierung die gesamte Menge an zugegebenen Hopfenprodukten von Wasser umgeben sein sollte, damit die für eine Isomerisierung benötigten OH$^-$-Ionen gleichmäßig zur Verfügung stehen. Folglich sollte der Behälter vollständig mit dem abgezogenen Teilstrom gefüllt, beziehungsweise die gesamte Menge an verwendeten Hopfenprodukten vollständig mit der Flüssigkeit umgeben sein. Um einen guten Kontakt zu schaffen, sollten hier die beschriebenen Homogenisierungsvarianten zum Tragen kommen. Darüber hinaus kann es in einigen Fällen von Vorteil sein, etwas Sauerstoff (Luft) in dem Behälter zu belassen, um so einige Isomerisierungsvorgänge noch beschleunigen zu können.

Für ein wässriges Fluid empfiehlt es sich, die Erhitzung in einem geschlossenen Behälter durchzuführen; oder eine Kochung durchzuführen, bei welcher durch den Einsatz eines Ventils höhere Kochtemperaturen erzielt werden können. Eine Kochung - gleichgültig bei welchem Druck sie durchgeführt wird - hat genau wie eine Verdampfung durch Entspannung den Vorteil, dass mit dem abgeführten Dampf auch unerwünschte Aromastoffe aus der Flüssigkeit ausgetrieben werden. Der entstehende Druck im Inneren des Behälters kann vorteilhaft auch für das Zuführen des Fluids zur Würze nach dem Erhitzen verwendet werden.

Die Erhitzung kann beispielsweise mit einer elektrischen Heizquelle, einem Wärmetauscher und/oder alternativ mittels Mikrowelleneinstrahlung oder durch eine Induktion erfolgen. Hierbei ist es insbesondere auch möglich, dass Fluid im Kreislauf zu erhitzen, es also aus dem eigentlichen Heiz- bzw. Isomerisierungsbehälter abzuziehen sowie durch einen externen Wärmetauscher - oder allgemein durch eine externe Heizquelle - zu führen und es in diesem auf die gewünschte Temperatur zu erwärmen, bevor es wieder in den eigentlichen Heizbehälter zurückgeführt wird. Hierdurch kann vermieden werden, dass der Heizbehälter an sich in seiner Ausführung einem Kessel entspricht. Letzteres kann gerade im Bezug auf die Druckgeräterichtlinie Nachteile - vor allem mit Hinsicht auf eine Überprüfung bzw. Abnahme des Behälters - haben.

Um im Falle eines Würzeteilstroms die benötigte Menge des abgezogenen Teilstromes weiter deutlich reduzieren zu können, kann der Behälter auch nach dem Prinzip eines Schnellkochtopfes" arbeiten. Hierzu wird eine geringe Menge des Teilstromes zusammen mit den Hopfenprodukten in den Behälter gegeben, so dass dieser nicht vollständig gefüllt ist. Hierauf wird der Teilstrom der Würze zum Kochen gebracht, während der Behälter noch offen ist. Durch das Verdampfen wird erreicht, dass die restliche Luft aus dem Behälter ausgetrieben werden kann. Nachdem dies erfolgt ist, wird die Vorrichtung verschlossen und der in ihr befindliche Dampf, zusammen mit den Hopfenprodukten, auf höhere Temperaturen erhitzt. Da das gesamte Innere der Vorrichtung somit mit Wasserdampf ausgefüllt ist und folglich die gesamten Hopfenprodukte von Wasserdampf umgeben sind, können sie problemlos und schnell isomerisieren. Der wesentliche Vorteil dieser Variante, im Gegensatz zu einem vollständigen Befüllen der Vorrichtung mit den Teilstrom, ist, dass eine deutlich geringere Menge eingebracht werden muss, wodurch auch weniger Vorläufer unerwünschter Aromakomponenten mit eingebracht werden. Hierdurch wird erreicht, dass deutlich weniger unerwünschte Aromastoffe in dem Teilstrom gebildet werden.

Die angegebene Verfahrensvariante bzw. generell die Verwendung einer möglichst geringen Menge Fluid ist natürlich auch bei der Verwendung eines anderen Fluids vorteilhaft, da sich aufgrund der geringeren benötigten Menge energetische Vorteile ergeben. Es braucht nämlich hierbei stets auch nur die geringere Menge aufgeheizt zu werden.

Darüber hinaus ist es ratsam, anstelle der Hauptgüsse oder der bereits homogenisierten Würze, einen Teil der Nachgüsse, welche dem letzten Auslaugen der Spelzen dienen, als Teilstrom zu verwenden, da dieser hierdurch eine deutlich geringere Konzentration an Vorläufern unerwünschter Aromastoffe besitzt. Folglich können auch weniger Aromastoffe nachgebildet werden, so dass ein nachträglicher Eintrag dieser Stoffe zu keiner geschmacklichen Beeinträchtigung führt. Ein weiterer wesentlicher Vorteil der Verwendung eines Teils der Nachgüsse ist, dass diese in der Regel einen deutlich höheren pH-Wert aufweisen als die Hauptgüsse oder die homogene Würze. Hierdurch kommen auch die oberhalb beschriebenen Vorteile höherer pH-Werte zum Tragen. Diese Variante hat den weiteren Vorteil, dass im Teilstrom eine geringere Menge an Heißtrub gebildet wird, da durch die Nachgüsse weniger Eiweiße mit eingebracht werden.

Sollte die Isomerisierung bei niedrigeren Temperaturen als der atmosphärischen Kochtemperatur des Fluids (welche über der atmosphärischen Kochtemperatur von Würze oder Wasser liegen kann) unter Verdampfung - und somit unter Austreibung unerwünschter Aromastoffe - durchgeführt oder auch in diesem Fall das Prinzip eines Schnellkochtopfes angewendet werden, muss hierbei lediglich der Druck im Behälter durch geeignete Apparaturen, wie beispielsweise Pumpen, reduziert werden. Darüber hinaus kann ein Austreiben unerwünschter Aromastoffe aus dem Fluid generell auch durch eine Desorption, beispielsweise durch das Ein- oder Darüberleiten von Gasen oder Dämpfen, hervorgerufen werden.

Nachdem die Isomerisierung der Bitterstoffe zu einem gewissen Grad abgeschlossen ist, kann der abgezogene Teilstrom der Würze zusammen mit den Hopfenprodukten der restlichen Würze wieder zugeführt werden.

Die im Folgenden beschriebenen Zuführungsmöglichkeiten des vorbehandelten Fluids sind für jedes verwendete Fluid gültig. Exemplarisch wird die Rückführung im Folgenden anhand eines abgezogenen Würzeteilstromes dargestellt.

Eine Zuführung kann zum einen direkt in die Vorrichtung zur Temperaturbehandlung der Würze bzw. in die Würzepfanne erfolgen. Hierzu wird der abgezogene Teilstrom über geeignete Rohrleitungen und Ventile der Würzepfanne wieder zugefügt. Da die Würze in der Pfanne einer Bewegung unterworfen ist und da nun die Löslichkeit der (isomerisierten) Bitterstoffe deutlich höher ist, ist es - je nach verwendetem Hopfenprodukt - möglich, durch ein langsames Zudosieren nahezu alle Iso-$\alpha$-Säuren in Lösung mit der restlichen Würze zu bringen. Hierdurch können die Verluste vermieden werden, die bei einer herkömmlichen Würzekochung durch eine mangelnde Lösung von $\alpha$-Säuren und/oder eine mangelnde Isomerisierung erfolgt wären. Da diese Verluste nun wegfallen, ist der Ausnutzungsgrad im Gegensatz zu früher deutlich gesteigert. Durch ein Zudosieren während der Temperaturbehandlung der Würze kann es darüber hinaus auch noch nachträglich zu einem Ausdampfen nachgebildeter, unerwünschter Aromastoffe kommen. Um die gleichmäßige Verteilung des abgezogenen Teilstromes in der restlichen Würze zu verbessern, kann die Zuführung zur Würzepfanne an mehreren Stellen erfolgen. Hierdurch wird vermieden, dass es zu besagten Zonen in der Würze mit Überschreitung der Löslichkeitsgrenze kommen kann.

In einer bevorzugten Ausführung des Verfahrens wird der abgezogene Teilstrom gegebenenfalls zusammen mit den Hopfenprodukten erst im Anschluss an die Würzekochung vor der Heißtrubabscheidung wieder zugeführt. Dies kann entweder durch ein kontinuierliches Zumischen zur restlichen Würze während der Überführung in den Heißtrubabscheider erfolgen. Das Zudosieren erfolgt hier vorteilhafter Weise direkt in die Rohrleitung, während die restliche Würze durch diese geführt wird. Durch ein langsames Zudosieren wird hierdurch erreicht, dass jeder zugeführte Teil der Mischung immer in "frische" Würze eingebracht wird und folglich vollständig gelöst werden kann.

Alternativ kann die Mischung auch im Heißtrubabscheider vorgelegt und die restliche Würze im Anschluss daran zugegeben werden oder der Teilstrom wird während der Heißtrubabscheidung in den Heißtrubabscheider, ähnlich wie in die Würzepfanne, zugeführt. Bei einem tangentialen Eintritt des Teilstroms oder des vorbehandelten Fluids in einen Whirlpool könnte hierdurch auch die Heißtrubabscheidung verbessert werden.

In einer weiter vorteilhaften Ausführung des Verfahrens empfiehlt es sich, den Teilstrom der Würze beziehungsweise die Mischung erst im Anschluss an die Heißtrubabscheidung der restlichen Würze wieder zuzuführen. Hierdurch können auch die Ausbeuteverluste vermieden werden, welche durch die Heißtrubabscheidung hervorgerufen werden. Im Idealfall kann somit erreicht werden, dass es zu keinen Ausbeuteverlusten im Sudhaus kommt. Der Teilstrom der Würze wird in diesem Fall ebenfalls kontinuierlich der restlichen Würze in einer Rohrleitung wieder zudosiert, während diese im Anschluss an die Heißtrubabscheidung einem Kühler und danach einer Gärvorrichtung oder einem Flotationstank zur Belüftung zugeführt wird. Die oben beschriebenen Vorteile dieser Art der Zudosierung bleiben auch hier erhalten.. In einer ebenfalls vorteilhaften Ausführung wird der Teilstrom bei Vorhandensein einer Vorrichtung zur Kühltrubabscheidung - dies kann bspw. ein Flotationstank sein- erst nach dieser wieder zugeführt. Hierbei können auch die Verluste im Kaltbereich vermieden werden, die durch Adsorption am Kühltrub hervorgerufen werden. Die Rückführung erfolgt hier vorteilhafter Weise in die Leitung von der Vorrichtung zur Kühltrubabscheidung zum Gärtank. Bei einer Rückführung des Teilstroms in den Kaltbereich sollte dieser jedoch vorher gekühlt werden, um bspw. Denaturierungen von Hefen zu vermeiden.

Prinzipiell kann der Teilstrom auch an noch späteren Stellen der Würze oder dem aus ihr resultierenden Bier zugeführt werden. Darüber hinaus ist die Zuführung zu anderen Chargen gerade bei der Verwendung von anderen Fluiden möglich. So kann beispielsweise eine mit Lauge hergestellte Mischung auch erst dem fertigen Bier vor oder nach der Filtration zugeführt werden, um auch die weiteren Verluste zu umgehen. Um dem Reinheitsgebot zu entsprechen sollte hierbei, bei der Verwendung von Würze, diese vorher durch die Zugabe von Hefe angegoren werden. Hieraus resultiert bereits bei geringen Vergärungsgraden per Definition Bier, welches auch nach dem Reinheitsgebot zu jeder Stelle mit anderem Bier verschnitten werden darf. Selbstverständlich ist es auch möglich, ein auf diese Weise hergestelltes Bier zu filtrieren oder es einer Temperaturbehandlung zur Haltbarmachung, z.B. einer Pasteurisation zu unterziehen, um es zumindest kurzzeitig lagerfähig zu machen und es somit beispielsweise der selben Charge, aus der es entstammt, erst während oder im Anschluss an die Lagerung zuzuführen. Eine zusätzliche Haltbarmachung ist aufgrund des hohen Bitterstoffgehaltes des vorbehandelten Fluides in der Regel aber nicht nötig, da dieser antimikrobiell wirkt. Neben einer möglichen Zugabe im Lagertank empfiehlt es sich vor allem, das vorbehandelte Fluid erst bei der Filtration der restlichen Charge im Drucktank vorzulegen, wodurch auch die Verluste vermieden werden können, welche bei der Filtration hervorgerufen werden. Da die Bitterstoffe somit an allen Hauptquellen - dieser Begriff wurde deswegen gewählt, da eine leichte Adsorption natürlich auch in jedem Behälter oder beispielsweise auch im Flascheninneren stattfinden kann - vorbeigeführt werden, an denen sie signifikant adsorptiv gebunden und somit wieder aus dem vorbehandelten Fluid entfernt werden können, kann erstmalig eine maximal mögliche Ausnutzung der zugesetzten Bitterstoffe erzielt werden. Aufgrund der Bewegung bei einem Filtrationsprozess wird auch in diesem Fall der Zuführung problemlos noch eine Homogenisierung des zu einem deutlich früheren Zeitpunkt abgezogenen Teilstromes mit der restlichen Charge sichergestellt.

Bei einer Zuführung des vorbehandelten Fluides bzw. der Bitterstoffe, welche erst im Anschluss an die Hauptgärung erfolgt, können sich darüber hinaus noch weitere Vorteile im Bereich der Gärung selbst ergeben. Wie erwähnt, haben Bitterstoffe eine antimikrobielle Wirkung und können somit auch das Wachstum von Hefezellen beeinflussen bzw. mindern. Darüber hinaus können sie auch die Gärung an sich und somit die Bildung von Gärungsnebenprodukten in für das resultierende Bier negativer Weise beeinflussen. Somit kann durch ein spätes Zuführen des vorbehandelten Fluides zur restlichen Würze auch erreicht werden, dass eine Gärung in der restlichen Würze optimaler (z.B. unter Bildung weniger unerwünschter Gärungsnebenprodukte) und vor allem schneller und demzufolge effizienter ablaufen kann, wodurch sich neben geschmacklichen auch energetische Vorteile ergeben können. Dies haben eigene Versuche, bei denen eine Gärung von bitterstofffreien Würzen durchgeführt wurde, bereits bestätigt.

Wird das Fluid oder der Teilstrom der Würze in einem abgeschlossenen Behälter auf höhere Temperaturen gebracht, ist naturgemäß auch der Druck in dem Behälter stark angestiegen, so dass das Zudosieren des Teilstromes zu restlichen Würze, gleichgültig an welcher Stelle dieser zurückgeführt wird, durch ein einfaches Öffnen von Ventilen erfolgen kann, solange der Behälter noch unter Druck steht. Durch den hohen Druck im Behälter und den Leitungen wird der Teilstrom beziehungsweise die Mischung aus dem Ventil gedrückt. Je nach Öffnung des Ventils geschieht dies mehr oder weniger schnell. Um diese Forderung noch zu unterstützen beziehungsweise den letzten Rest des vorbehandelten Fluids zu fördern, können darüber hinaus Pumpen zum Einsatz kommen. Auch kann der Behälter wie vorbeschrieben leer gedrückt werden.

In einer alternativen Ausführung wird der Behälter vorher ganz oder teilweise und insbesondere kontinuierlich entspannt, wodurch es - genau wie bei einer ebenfalls möglichen Kochung durch Wärmezufuhr - zu einem intensiven Ausdampfen nachgebildeter Aromastoffe kommt. Zwar ist auch eine schlagartige Entspannung, beispielsweise in einen vorab evakuierten weiteren Behälter möglich, allerdings hat diese Form der Entspannung neben einer schlechteren Ausdampfeffizienz auch den Nachteil, dass sich auch das Verhältnis der Ausdampfung unerwünschter Komponenten zur Ausdampfung der erwünschten Hopfenkomponente Linalool deutlich verschlechtert. Da Iso-$\alpha$-Säuren in Wasser einen Dampf-Flüssigkeits-Verteilungsfaktor von nahezu Null besitzen, führt eine Entspannung und die damit einhergehende Verdampfung aber immer dazu, dass diese während des Verdampfungsprozesses in der Mischung verbleiben und folglich auch nach dem Verdampfen noch der restlichen Würze zugeführt werden können. Geschmackliche Beeinträchtigungen, welche durch höhere Temperaturen hervorgerufen werden können, werden so vermieden. Hierbei ist jedoch zu beachten, dass - wie erwähnt - immer auch der gewünschte Hopfeninhaltsstoff Linalool, welcher maßgeblich für die Entstehung einer Hopfenblume verantwortlich ist, mit ausgedampft wird. Dies ist bei einem Entspannen beziehungsweise Zudosieren in die restliche Würze nicht der Fall, da die Aromastoffe entsprechend ihrem Phasengleichgewicht in der Flüssigkeit absorbiert oder bei vollständiger Kondensation des Dampfes in die restliche Würze überführt werden.

Bei der Durchführung von Verdampfungen können die entstehenden Brüden vorteilhafterweise auch einem Wärmetauscher (Dunstkondensator) zur Gewinnung der in ihnen enthaltenen Wärme zugeführt werden, wodurch die zur Durchführung der Erfindung benötigte Energie zumindest teilweise zurückgewonnen werden kann.

Vorteilhaft können die leicht flüchtigen Aromastoffe durch spezielle Hopfenprodukte auch separat der Würze zugegeben werden. Zur Erzielung hopfenaromatischer Würzen oder Biere kann beispielsweise ein Hopfenprodukt eines Aromahopfens in einem separaten Behälter einem Würzeteilstrom beigegeben und die Mischung erhitzt werden, ohne die Mischung zu verdampfen. Auch die Hopfenaromastoffe, wie beispielsweise Linalool, müssen in der Würze gelöst werden. Die aufgezeigten Vorteile der Erfindung bei der Lösung von Hopfenbestandteilen in Würze bleiben auch hier erhalten. Dies gilt vor allem bei einer Durchführung gezielter Extraktionsprozesse. Durch Kombination zweier oder mehrerer Behälter kann dem einen Bitterhopfen zugeführt werden, wobei verdampft wird, um Fehlgeschmäcke zu vermeiden. Dem zweiten Behälter wird Aromahopfen zugegeben und auf eine Verdampfung verzichtet, wodurch die flüchtige Komponente Linalool nicht entweichen und somit vollständige in die Würze eingebracht werden kann. Durch diese Kombination kann die Einbringung von Hopfenaromastoffen unabhängig von der Einbringung von Hopfenbitterstoffen gesteuert werden und erfolgen, wodurch sich vollkommen neue Möglichkeiten in der Erzielung hopfenaromatischer Biere ergeben. Darüber hinaus musste aufgrund der starken Ausdampfung des Stoffes Linalool ( der Dampf-Flüssigkeitsverteilungsfaktor von Linalool in Wasser bei 100°C liegt bei ca. 36) bisher viel Aromahopfen - vor allem am Ende der Kochung - der Würze zugegeben werden, um überhaupt Biere mit einem ausgeprägten Hopfenaroma erzeugen zu können. Durch das angegebene Verfahren ist es nun auch möglich, die benötigte Menge an Aromahopfen deutlich zu reduzieren, da auch der Ausnutzungsgrad des in den Hopfenprodukten vorhandenen Linalools stark gesteigert werden kann.

Darüber hinaus ist es bei Verwendung von Hopfenprodukten eines Aromahopfens auch möglich, den bei einer Verdampfung entweichenden Dampf-, bzw. das bei einer Desorption entweichende Gas-Dampfgemisch, gezielt aufzufangen, evtl. zu kondensieren und ganz oder zumindest in einzelnen Fraktionen dem vorbehandelten Fluid und/oder der restlichen Würze wieder zuzuführen. Insbesondere kann der Dampf hierbei aufgefangen und einer Auftriebskolonne zugeführt werden. In dieser wird eine Rektifikation vollzogen, wodurch sich leichtflüchtige Aromastoffe, und somit auch Linalool, im Dampf stark anreichern. Da der die Kolonne verlassende Dampf eine deutlich gesteigerte Konzentration an Linalool besitzt, kann dieser kondensiert und dem vorbehandelten Fluid und/oder der restlichen Würze wieder zugeführt werden. Natürlich kann der Dampf oder das Kondensat auch auf einer beliebigen Trennstufe der Kolonne entnommen werden, um somit das Verhältnis aus Linalool zu unerwünschten Aromastoffen möglichst groß zu halten. Ist der Konzentrationsanstieg an Aromastoffen im Dampf so hoch, dass sich nach dessen Kondensation eine wässrige und eine aromastoffreiche Phase ausbilden, kann hier insbesondere auch nur die aromastoffreiche Phase wieder zugeführt werden.

Des Weiteren empfiehlt es sich, den Behälter während oder im Anschluss an das Zudosieren mit einem Fluid, hier vorzugsweise mit einem weiteren Würzeteilstrom, zu spülen, damit auch alle eingesetzten Hopfenprodukte vollständig eingebracht werden können. Hierbei findet während dem Spülvorgang naturgemäß auch eine Fest-Flüssig-Extraktion der Bitterstoffe aus dem Hopfenprodukt statt. Um einen Spülvorgang durchführen zu können, ist der Behälter bei Verwendung von Würze als Fluid durch geeignete Rohrleitungen mit der Würzepfanne, dem Heißtrubabscheider oder weiteren Rohrleitungen verbunden, in denen zum Spülvorgang benötigte Würze vorhanden ist. Der Anschluss dieser Rohrleitungen empfiehlt sich insofern etwas stromauf des Anschlusses, über welchen das vorbehandelte Fluid der Würze wieder zugeführt wird. Somit kann Würze über eine Bypassleitung durch den Heizbehälter geleitet werden und diesen durchspülen. Alternativ ist der Behälter über geeignete Rohrleitungen mit einem weiteren Behälter verbunden, in welchem das für den Spülvorgang verwendete Fluid vorgelegt werden kann. Beim Spülen mit Wasser kann er auch direkt an eine wasserführende Leitung angeschlossen werden.

In einer vorteilhaften Variante der Erfindung wird in dem vorbehandelten Fluid eine gezielte Fest-Flüssig-Trennung zwischen dem Fluid und dem zugesetzten Hopfenprodukt durchgeführt. Hierdurch wird es auch ermöglicht, trotz Zugabe eines feststoffreichen Hopfenproduktes, das vorbehandelte Fluid der restlichen Würze auch Prozessschritten nach der Heißtrubabscheidung, oder auch der Kühltrubabscheidung, wieder zuzuführen. Die Fest-Flüssig-Trennung kann hierbei nach mehreren Verfahren ablaufen. Diese sind die Sedimentation, die Filtration und das Auspressen. Bei der Sedimentation erfolgt durch Einwirkung der Schwerkraftfeldes, des Fliehkraftfeldes oder gegebenenfalls eines magnetischen Feldes eine freie, dann behinderte Bewegung und zuletzt die Ablagerung der Feststoffe (Hopfenprodukt), wodurch eine Sedimentschicht entsteht. Am Ende des Sedimentationsvorganges wird die entsprechend reine Flüssigkeit abgeführt. Zur Ausbildung eines Fliehkraftfeldes können beispielsweise Zentrifugen eingesetzt werden. Bei der Filtration wird der Feststoff mit Hilfe einer Filterschicht aus dem strömenden Fluid abgeschieden bzw. zurückgehalten. Als Filtermittel können steife, nicht deformierbare Materialien wie poröse Naturstoffe, feste Sinterstoffe oder mechanisch aufbereitete metallische Stoffe verwendet werden. Darüber hinaus können auch flexible Stoffe, wie beispielsweise Textilien, Gewebe oder Zelluloseprodukte zum Einsatz kommen. Der zurückgehaltene Feststoff, also das Hopfenprodukt, verhält sich hierbei selbst wie ein Filtermittel. Dadurch, dass es auch möglich ist, immer neues Fluid bzw. "frische" Würze durch den Filterkuchen (Hopfenprodukte) durchzuleiten, kommt es hierbei auch zu einer später noch näher beschriebenen Fest-Flüssig-Extraktion. Da Bitterstoffe auch an Filterhilfsmitteln gebunden werden können, empfiehlt sich hierbei die Verwendung von metallischen Stoffen, insbesondere in der Ausführung eines Siebgewebes. Die treibende Kraft bei dieser Form der Fest-Flüssig-Trennung ist die Druckdifferenz zwischen den beiden Seiten des Filters, die von der Schwerkraft (hydrostatischer Druck), von Pumpen vor oder hinter dem Filter (Druck- oder Saugfiltration) und/oder durch die Zentrifugalkraft erzeugt werden kann.

Da die Entfernung der Flüssigkeit beim Auspressen mit Hilfe der Verringerung des Probenvolumens erfolgt, muss die Feststoffschicht deformierbar sein und ihr Korngefüge muss dem äußeren Druck durch Verschiebung der einzelnen Körner nachgeben können, was für die eingesetzten Hopfenprodukte zutrifft. Insofern ist gerade diese Prozessführung überaus vorteilhaft. Natürlich ist auch in diesem Fall der Einsatz einer Filterschicht immer notwendig. Für eine effektive Auspressung wird hierbei die Feststoffschicht durch eine äußere Kraft zusammengepresst. Diese kann beispielsweise durch Kompaktierwalzen, durch Vibrationen oder in einer besonders vorteilhaften Ausführung mit Hilfe eines Kolbens bzw. des erwähnten Stempels erfolgen. Ein Auspressen ist deswegen sehr vorteilhaft, da hierdurch mehr bitterstoffreiches Fluid gewonnen werden kann. Das Auspressen kann hierbei prinzipiell vor, während oder nach einer im Anschluss beschriebenen gezielten Fest-Flüssig-Extraktion erfolgen, bzw. sich als Teil dieser verstehen.

In einer besonders vorteilhaften Ausführung der Erfindung wird eine gezielte Fest-Flüssig-Extraktion zur Gewinnung der Bitterstoffe aus einem Hopfenprodukt durchgeführt. Diese Fest-Flüssig-Extraktion kann prinzipiell auch vor der Temperaturbehandlung des zugesetzten Fluides mit dem Hopfenprodukt erfolgen, wobei in diesem Fall die Isomerisierung der Bitterstoffe erst im Anschluss - und somit vor allem im Extraktionsmittel gelöst - stattfindet. Dies hat allerdings gerade bei Verwendung von Würze oder Wasser den Nachteil, dass sich unisomerisierte Bitterstoffe schwerer extrahieren / lösen lassen und, dass nach einem Extraktionsprozess prinzipiell eine größere Menge Fluid zur Isomerisierung erhitzt werden muss. Bei einer Verwendung von Alkohol als Lösungsmittel sollte beachtet werden, dass es auch zu einer erwähnten Estherbildung während der anschließenden Isomerisierung kommen kann, was die Ausnutzung wieder mindern würde. Aus diesem Grunde erfolgt eine gezielte Fest-Flüssig-Extraktion der Bitterstoffe aus dem Hopfenprodukt vorteilhafterweise erst im Anschluss oder während einer Isomerisierung der Bitterstoffe. Diese Fest-Flüssig-Extraktion kann diskontinuierlich oder kontinuierlich durchgeführt werden. Bei einer diskontinuierlichen Fahrweise kann die Extraktion beispielsweise in einem Behälter erfolgen, der mit einem Rührwerk und/oder einer Umpumpanlage verbunden ist. Hierbei kann der Extraktionsbehälter mit dem Heiz- bzw. Isomerisierungsbehälter identisch sein oder es kann für die Extraktion ein separater Behälter herangezogen werden. Um die Behältergröße des Isomerisierungsbehälters aus den erwähnten Gründen möglichst klein zu halten, empfiehlt es sich, die Extraktion in einem separaten Behälter durchzuführen, welcher vorteilhafterweise ebenfalls beheizt werden kann. Darüber hinaus ist es auch möglich, mehrere Extraktionsapparate hintereinanderzuschalten. Als mögliche Verfahrensvarianten der Fest-Flüssig-Extraktion können hierbei das Verdrängungs-, das Durchlauf- sowie das Eintauchverfahren zum Einsatz kommen. Beim Verdrängungsverfahren wird das Extraktionsgut, also hier das Hopfenprodukt, mit frischem Fluid beaufschlagt, worauf das Fluid mit dem Hopfenprodukt zur Extraktion gut durchmischt wird. Hierfür können beispielsweise Rührer zum Einsatz kommen. Im Anschluss daran setzt sich der Extraktionsrückstand, also das an Bitterstoffen verarmte Hopfenprodukt; ab und wird somit nicht in die restliche Würze eingebracht, und das Bitterstoffe enthaltende Fluid wird abgezogen. Dieser Vorgang kann mehrmals wiederholt werden, bis eine gewünschte Extraktion der Bitterstoffe aus dem Hopfenprodukt erreicht ist. Bei Verwendung von alternativen und nur für eine gute Extraktion eingesetzten Fluiden, kann das Fluid im Anschluss an die Extraktion auch aufbereitet werden. Beim Durchlaufverfahren wird das Hopfenprodukt nicht bewegt. Das Fluid (Lösungsmittel) durchdringt das Feststoffbett und entfernt somit aus diesem die Bitterstoffe. Da das Feststoffbett hierbei das durchlaufende Lösungsmittel filtriert (s.o.), sind in dem austretenden Fluid nur geringe Feinanteile festzustellen, wodurch diese Verfahren gerade bei einer Rückführung des vorbehandelten Fluides an späteren Stellen im Brauprozess von Vorteil ist. Beim Eintauchverfahren hingegen wird das Hopfenprodukt durch das Lösungsmittel geführt. Bei allen Verfahrensvarianten ergibt sich bei Verwendung von im Produkt verbleibenden Fluiden, wie Beispielsweise Wasser oder Würze, als Lösungsmittel der grundlegende Unterschied zu einer gängigen Fest-Flüssig-Extraktion, dass das Lösungsmittel vom extrahierten Stoff nicht mehr getrennt werden muss. Bei Verwendung alternativer Fluide für die Extraktion erfolgt im Anschluss an selbige in der Regel noch eine Trennung der gelösten Bitterstoffe vom Lösungsmittel, was beispielsweise durch destillative Prozesse erfolgen kann. Bei dieser Verfahrensvariante kann das von den Bitterstoffen befreite Lösungsmittel wieder für nachfolgende Extraktionsprozesse genutzt werden. Eine Fest-Flüssig-Extraktion kann in verschiedenen Apparaturen mit unterschiedlichen Ausführungsformen erfolgen. Wegen der sie entscheidend bestimmenden Diffusionsvorgänge werden sie auch als Diffusionsbaterien bezeichnet. Wie beschrieben können deren entscheidende Parameter nach dem 1. FICKschen Gesetz beschrieben werden.

Für die Extraktion können verschiedene Fluide zum Einsatz kommen. Hierzu zählen, wie später noch bei der Verfahrensvariante der Hochdruckextraktion beschrieben, auch Gase. Das Fluid selbst sollte aufgrund der Erhöhung des Diffusionskoeffizienten hierbei eine möglichst geringe dynamische Zähigkeit sowie gegebenenfalls eine erhöhte Temperatur aufweisen, um die Extraktion zu beschleunigen. Aufgrund der guten Lösungseigenschaften ist die Verwendung von Alkohol bzw. alkoholhaltigen Flüssigkeiten vorteilhaft. Unter Einhaltung des Reinheitsgebotes ergibt sich die Möglichkeit der Verwendung von Bier oder Würze - und hierunter aufgrund ihrer niedrigeren dynamischen Zähigkeit die Verwendung von Nachgüssen -, aber bei der später beschriebenen Hochdruckextraktion auch die Verwendung von Gasen, die im Brauprozess vorkommen oder gebildet werden. Hierunter fallen beispielsweise Kohlenstoffdioxid oder Stickstoff.

Darüber hinaus ist es möglich, für einen Extraktionsprozess auch zusätzlich die Hopfenproduktreste eines anderen Brauprozesses zu verwenden, wenn sie noch größere Mengen an Bitterstoffen beinhalten. Hierdurch können Verluste an Bitterstoffen, welche in den Hopfenproduktresten verblieben sind, vermieden werden. Die Verwendung von Hopfenproduktresten wird teilweise auch in einem Brauprozess mit herkömmlicher Hopfengabe durchgeführt und entspricht dem Deutschen Reinheitsgebot.

Der Extraktionsprozess kann beispielsweise in einer einstufigen, diskontinuierlich arbeitenden Extraktionsbatterie erfolgen. Hierbei wird der Extraktor mit dem vorbehandelten Hopfenprodukt - unter Umständen nach Entfernung des für die Isomerisierung benötigten Fluides - und dann mit dem Lösungsmittel befüllt. Das Hopfenprodukt liegt hier beispielsweise auf einem Siebboden. Das Gemisch wird daraufhin unter Rühren und gegebenenfalls unter Erhitzung bewegt, wobei der Feststoff ausgelaugt und die Bitterstoffe gegebenenfalls noch isomerisiert werden. Danach wird das Lösungsmittel mittels Pumpen über den Siebboden abgezogen. Alternativ kann die Fest-Flüssig-Trennung hier beispielsweise auch durch eine rein durch die Schwerkraft hervorgerufene Sedimentation erfolgen. Das Extraktionsmittel wird gegebenenfalls aufbereitet. Die Extraktion wird mit frischem Lösungsmittel erneut durchgeführt. Dieser Vorgang wird solange wiederholt, bis das Hopfenprodukt genügend ausgelaugt ist, also bis es keinen oder nur noch einen geringen Anteil an Bitterstoffen enthält.

Darüber hinaus kann auch eine kontinuierliche Fahrweise durchgeführt werden. Hierbei wird, wie bei der Fest-Flüssig-Trennung beschrieben, das vorbehandelte Fluid - unter Ausbildung einer aus den Feststoffen des Hopfenproduktes bestehenden Filterschicht - durch einen Filter geführt und mit "frischem" Fluid gespült, wodurch es zu besagter Extraktion der Bitterstoffe kommt. Als Filter kann hier auch der in einem oben beschriebenen Extraktor oder in einem Heizbehälter unter Umständen vorhandene Siebboden eingesetzt werden, so dass diese Form der Extraktion auch im Anschluss an einen diskontinuierlich arbeitenden Extraktionsprozess und/oder im Heizbehälter stattfinden kann.

Alternativ zu der eben beschriebenen kontinuierlichen Fahrweise können auch in Reihe geschaltete Extrakteure nacheinander vom Lösungsmittel durchströmt werden. Hierzu können Hopfenprodukte in mehreren Extraktionsbehältern vorgelegt werden. Somit ist es insbesondere auch möglich, den Hopfenproduktrest eines vorangegangenen Brauprozesses (Sudes) noch weiter auszulaugen. Dieser wird hierzu aufgrund des geringeren Bitterstoffanteils im ersten Behälter, den das Extraktionsmittel durchströmt, vorgelegt. Der oder die darauffolgenden Behälter sind entweder ebenfalls mit - einen höheren Bitterstoffanteil enthaltenden - Hopfenproduktresten aus anderen Brauprozessen und dann mit dem Hopfenprodukt des aktuellen Brauprozesses (mehrere Extrakteure) oder direkt mit diesem (zwei Extrakteure) befüllt. Ist ein Brauprozess beendet, wird der erste Behälter von dem nun vollkommen ausgelaugten Hopfenprodukt entleert, mit dem neuen Hopfenprodukt des folgenden Brauprozesses befüllt und an die letzte Stelle in der Behälterreihe angeordnet. Behälter zwei eines vorangegangenen Brauprozesses "rutscht" für den folgenden Brauprozess folglich an erste Stelle und wird im Anschluss an diesen Brauprozess entleert und für den nächsten Brauprozess mit neuem Hopfenprodukt befüllt, wobei er wiederum an die letzte Stelle in der Behälterreihe angeordent wird usw. Dadurch, dass sich das weitestgehend ausgelaugte Hopfenprodukt somit stets im ersten Behälter befindet, ist gewährleistet, dass das Extraktionsmittel die Hopfenprodukte immer in der Reihenfolge aufsteigender Bitterstoffkonzentrationen durchströmt. Durch dieses Vorgehen ist es gerade bei vielen aufeinanderfolgenden Suden möglich, die maximale Bitterstoffkonzentration pro Sudtag in die Würzen einzubringen.

Des Weiteren können auch Extraktionsanlagen mit Förderband und mehreren Extraktionskammem zum Einsatz kommen. Hierbei durchströmt die Lösungsmittelphase das aufgeschüttete Extraktionsgut und wird nach dem Durchlauf durch das Feststoffbett unten aufgefangen sowie mittels einer Förderpumpe der nächsten Sektion angeboten und dort beispielsweise versprüht. Die Dicke der Extraktionsschicht auf dem Band kann hierbei eingestellt werden. Darüber hinaus können auch Neuentwicklungen, wie beispielsweise der Karusselextraktor o. ä. zum Einsatz kommen.

Aufgrund der möglicherweise begrenzten, für den Extraktionsprozess zur Verfügung stehenden Zeit werden in einer vorteilhaften Ausführung darüber hinaus Apparaturen eingesetzt, mit welchen eine Fest-Flüssig-Extraktion beschleunigt und somit die Extraktionsdauer abgesenkt bzw. die Ausbeute des Fest-Flüssig-Extraktionsprozesses erhöht werden kann. Diese Apparaturen arbeiten beispielsweise mit Vibrationen oder einer Ultrabeschallung. So haben eigene Versuche gezeigt, dass die Extraktion von isomerisierten Bitterstoffen aus Hopfenpellets unter Einsatz von Ultraschall mit einer Schallfrequenz von ca. 300 - 400 kHz in 5 Minuten Extraktionszeit ungefähr die dreifache Menge an Bitterstoffen in Lösung brachte wie ohne Ultraschall. Somit ergibt sich die Möglichkeit, eine gezielte Fest-Flüssig-Extraktion auch in kurzen Zeiten, wie beispielsweise der Dauer des Kühlprozesses im Anschluss an die Heißtrubabscheidung, durchzuführen.

Da die Abnahme an Bitterstoffen im Hopfenprodukt - und somit der Konzentrationsverlauf im Lösungsmittel - bei einer gezielten Fest-Flüssig-Extraktion mit guter Näherung einer Exponentialfunktion folgt, ergibt sich hierbei insbesondere auch die Möglichkeit der getrennten Behandlung bzw. Zuführung der entstandenen bitterstoffreichen Lösung. So können einzelne gewonnene Fraktionen an verschiedenen Stellen der restlichen Würze wieder zugeführt werden. Insbesondere können die ersten Fraktionen, welche naturgemäß einen höheren Bitterstoffanteil aufweisen, getrennt geführt und der restlichen Würze erst im Anschluss an die Hauptgärung wieder zugegeben werden, während die bitterstoffärmeren Fraktionen beispielsweise bereits im Heißbereich zurückgeführt werden.

In einer weiteren, allerdings etwas aufwendigeren Verfahrensvariante kann zur Extraktion der Bitterstoffe auch eine Hochdruckextraktion durchgeführt werden. Natürlich kann auch diese Form der Extraktion vor, während oder nach einer Isomerisierung der Bitterstoffe erfolgen. Unter Hochdruckextraktion kann hierbei ein thermisches Trennverfahren mit komprimierten oder überkritischen Gasen als Lösungsmittel verstanden werden. Im überkritischen Zustand haben die eingesetzten Gase wegen ihrer Dichte ebenfalls vorteilhafte Eigenschaften wie die beschriebenen flüssigen Lösungsmittel, vor allem, was das Lösen von Bitter- und/oder Aromastoffen (Linalool) betrifft. Dabei verlieren Gase aber im überkritischen Zustand nicht die hervorstechenden Merkmale von gasförmigen Phasen, vor allem ihre geringeren Viskositätswerte im Gegensatz zu flüssigen Phasen, was zu einer drastischen Erhöhung des Diffusionskoeffizienten und einer damit einhergehenden optimierten Extraktion führt. Geringe Viskositäten bedingen gute Stofftransporteigenschaften. Stoffe lassen sich jeweils auch über ihre kritischen Punkte charakterisieren. Oberhalb der kritischen Temperatur lässt sich ein gasförmiger Stoff nicht mehr verflüssigen. Beispielhaft sei diese Tatsache für das in einer Brauerei naturgemäß entstehende und somit häufig vorkommende Kohlenstoffdioxid erläutert, dessen kritische Temperatur 31,3 °C und dessen kritischer Druck 73,8 bar beträgt. Oberhalb von 31,3°C kann Kohlenstoffdioxid nicht verflüssigt werden, und oberhalb von 100°C verhält sich Kohlenstoffdioxid wie ein ideales Gas.

Ein gasförmiges Lösungsmittel lässt sich jeweils um seinen kritischen Punkt durch einfache Druck- und Temperaturänderung in seinen Eigenschaften stark variieren, so dass sich ein Extraktionsprozess vereinfacht, der in diesem Fall - mit Ausnahme des Lösens der Bitterstoffe in Lösungsmitteln, welche später auch der Würze zugeführt werden - ja immer aus den Verfahrensschritten Lösen der Bitter- und/oder Aromastoffe aus dem Hopfenprodukt, Trennen der gelösten Stoffe vom Lösungsmittel und Regeneration des Lösungsmittels besteht.

Gerade zur Gewinnung von evtl. thermisch labilen Hopfenaromastoffen bietet sich der Einsatz von Kohlenstoffdioxid wegen seiner niedrigen kritischen Werte von Druck und Temperatur an (s.o.). Darüber hinaus kann gerade das im Brauprozess gewinnbare Gärungsgas, welches überwiegend aus Kohlenstoffdioxid besteht, aufgrund seines Alkoholgehaltes noch die beschriebenen weiteren Vorteile für eine Extraktion von Bitterstoffen haben. Des Weiteren können natürlich auch andere Gase, wie beispielsweise Stickstoff, verwendet werden. Hierbei ist allerdings zu beachten, dass sich keine negative Beeinflussung des resultierenden Bieres ergibt.

Das Verfahren der Gewinnung der Bitterstoffe mittels Gasen kann hierbei am Beispiel von Kohlenstoffdioxid als Fluid wie folgt beschrieben werden. Gasförmiges Kohlenstoffdioxid wird komprimiert und gekühlt. In einem Extraktionsbehälter, welcher aufgrund seiner Druckbeständigkeit vorteilhafterweise auch der Isomerisierung dienen kann, findet die Hochdruckextraktion statt. Das überkritische Kohlenstoffdioxid mit den gelösten Bitterstoffen wird hierauf entspannt und einem Abscheider zugeführt. Hier werden die bitterstoffreiche Flüssigphase und die reine Gasphase unter geeigneten Bedingungen voneinander getrennt. Die Flüssigphase kann entnommen und der Würze zugegeben und die bitterstofffreie Gasphase dem Extraktionsbehälter neu zugeführt werden.

Durch eine Zugabe von anderen Komponenten können hierbei die technologischen Möglichkeiten der Hochdruckextraktion noch erweitert werden. So kann beispielsweise die kritische Temperatur von reinem Kohlenstoffdioxid durch die Zugabe von Stickstoff deutlich abgesenkt werden. Bei Gasgemischen verbessern sich darüber hinaus auch das Lösungsvermögen sowie die Selektivität gegenüber einem reinen Gas.

Das Herauslösen der Bitterstoffe aus einem Hopfenprodukt kann natürlich prinzipiell auch durch andere Verfahren als der Extraktion, wie beispielsweise einer Desorption mit geeigneten Gasen oder Dämpfen, erfolgen.

Zur Durchführung des Verfahrens eignen sich alle gängigen Hopfenprodukte. Da Rohhopfen, gemahlener Hopfen oder Hopfenpellets jedoch auch immer Schale des Hopfens mit in die Würze einbringen, welche im Zuge der Heißtrubabscheidung oder durch so genannte Hopfenseiher aus der Würze entfernt werden muss, empfiehlt sich bei Verwendung dieser Produkte immer eine Zudosierung vor der Heißtrubabscheidung, um mögliche Beeinträchtigungen bei der weiteren Bierbereitung zu vermeiden. Werden jedoch Hopfenextrakte verwendet, bei welchen nahezu keine Zellstruktur in das Fluid mit eingebracht wird oder wird eine Fest-Flüssig-Trennung oder eine gezielte Hochdruck- bzw. Fest-Flüssig-Extraktion durchgeführt, empfiehlt sich eine Zudosierung nach der Heißtrubabscheidung, um auch die durch die Heißtrubabscheidung hervorgerufenen Ausbeuteverluste verhindern zu können.

Bei Verwendung von Extrakten oder der Durchführung einer Fest-Flüssig-Trennung oder einer Hochdruck- bzw. Fest-Flüssig- Extraktion ist darüber hinaus auch eine Zuführung nach der Kühltrubabscheidung vorteilhaft, da hierdurch auch die durch diesen Klärungsprozess hervorgerufenen Verluste umgangen werden. Für eine ebenfalls mögliche Zuführung an späteren Stellen gelten die oben aufgeführten Vorteile.

In einigen Fällen kann es von Vorteil sein, nur einen Teil der verwendeten Hopfenprodukte über die Vorrichtung in die Würze einzubringen, während der restliche Teil wie herkömmlich in der Würzepfanne zugegeben wird. Hierdurch können speziell bei der Verwendung von Aromahopfen geschmackliche Vorteile der resultierenden Biere erzielt werden.

Darüber hinaus können einige Inhaltsstoffe des Hopfens die Koagulation von Eiweißen fördern. Somit kann die Zugabe einer Teilmenge des Hopfenprodukts in die Würzepfanne die dort benötigte Eiweißausscheidung forcieren.

Auch kann es wie vorbeschrieben vorteilhaft vorgesehen sein, dem zu erhitzenden Fluid ein Hopfenprodukt eines Bitterhopfens zuzumischen, während ein anderes Fluid ohne Verdampfung separat mit einem Hopfenprodukt eines Aromahopfens versehen wird. Beide vorbehandelten Fluide werden unabhängig an geeigneter Stelle der Würze zugeführt. Diese Kombination kann ebenfalls zur Erzielung geschmacklicher Vorteile des hergestellten Bieres eingesetzt werden.

Durch das angegebene Verfahren konnten in eigenen Versuchen Ausnutzungen erzielt werden, welche deutlich über denen der herkömmlichen Bierbereitung mit konventioneller Hopfengabe liegen. So konnten bei Rückführung des vorbehandelten Fluides nach der Heißtrubabscheidung Ausnutzungsgrade von deutlich über 50 %, bei Rückführung nach der Hauptgärung von deutlich über 70 % erzielt werden. Geschmacklich waren die so hergestellten Biere einwandfrei und insbesondere nicht von denen mit den gleichen Zutaten, aber auf konventionellem Weg, hergestellten Bieren zu unterscheiden.

Vorrichtungstechnisch wird die erfindungsgemäße Aufgabe durch eine Vorrichtung zur Bierbereitung gelöst, welche einen Behälter zur Maischebereitung, eine Vorrichtung zur Temperaturbehandlung der Würze, einen Heißtrubabscheider und einen Gärbehälter aufweist. Die Vorrichtung weist ferner einen separaten Heizbehälter, umfassend eine Einbringstelle für ein Hopfenprodukt und einen Fluideinlass für ein insbesondere wässeriges Fluid, zur Erhitzung des Fluids mit dem Hopfenprodukt auf. Dabei weist der Heizbehälter ferner einen Fluidauslass auf, der an eine würzeführende Stelle angeschlossen ist.

Für die Vorrichtung ist es dabei nicht nötig, dass die angegebenen Prozesse alle in verschiedenen Behältern ablaufen. Es soll von der erfindungsgemäßen Vorrichtung genauso umfasst sein, dass die Maischebereitung, die Temperaturbehandlung, die Heißtrubabscheidung und/oder die Gärung auch in einem einzigen Behälter oder jeweils einzelne dieser Prozesse in einem gemeinsamen Behälter zusammengefasst sein können. So wird insbesondere eine Ausgestaltung umfasst, gemäß der die Maischebereitung und die Temperaturbehandlung in einer Pfanne, oder die Temperaturbehandlung und die Heißtrubabscheidung in einer Pfanne durchgeführt werden.

Der angegebene Heizbehälter kann sich grundsätzlich außerhalb der vorhandenen Brauereianlagen befinden. Der Heizbehälter kann aber ebenso vom Inneren der vorhandenen Anlagen angeordnet sein. So kann der Heizbehälter beispielsweis im Inneren einer bestehenden Würzepfanne eingebaut sein. Darüber hinaus können auch mehrere separate Heizbehälter an einer Brauanlage angeordnet sein.

Die für das Verfahren zur Bierbereitung genannten Vorteile können hierbei sinngemäß auf die Vorrichtung übertragen werden. Weitere vorteilhafte Ausführungen der Vorrichtung können den hierzu formulierten Unteransprüchen entnommen werden.

In einer vorteilhaften Ausgestaltung der Vorrichtung zur Bierbereitung ist der Fluidauslass an eine Zuführleitung angeschlossen, die eine Anzahl von Abzweigleitungen aufweist, wobei die Abzweigleitungen in die Vorrichtung zur Temperaturbehandlung der Würze, in die Würzeleitung zwischen der Vorrichtung zur Temperaturbehandlung der Würze und dem Heißtrubabscheider, in den Heißtrubabscheider, in die Würzeleitung aus dem Heißtrubabscheider, in einen dem Heißtrubabscheider nachgeschalteten Kühler, in eine Würzeleitung zwischen dem Kühler und einem Kühltrubabscheider und/oder in die Würzeleitung aus dem Kühltrubabscheider münden, und wobei den Abzweigleitungen jeweils ein Ventil zur Absperrung oder Freischaltung zugeordnet ist.

Bei dieser Ausgestaltung ist die Zuführung des vorbehandelten Fluids bzw. des Würzeteilstroms mit zugesetztem Hopfenprodukt zurück in den Würzestrom des eigentlichen Brauvorganges über beispielsweise zwei Abzweigleitungen variabel. Zum einen kann somit die Vorrichtung an die entsprechenden Wünsche des Bierbrauers angepasst werden. Zum anderen ist aber auch bei einer bestehenden Anlage eine geänderte Rückführung des Fluids oder des Würzeteilstroms bei einer Abwandlung des verwendeten Hopfenprodukts oder bei der Bereitung unterschiedlicher Biere anpassbar.

In einer überaus bevorzugten Ausgestaltung sind der Vorrichtung Apparaturen zur Fest-Flüssig-Extraktion, Fest-Flüssig-Trennung und/oder zur Hochdruckextraktion zugeordnet. Insbesondere ist die Vorrichtung in diesem Falle auch mit Apparaturen zur Beschleunigung der Fest-Flüssig-Extraktion, hier insbesondere mit Ultraschallgeneratoren, verbunden.

In einer besonders vorteilhaften Ausgestaltung der Vorrichtung ist dem Heizbehälter ein Temperatursensor zugeordnet, sind der Fluideinlass, gegebenenfalls die Zufuhr des Hopfenprodukts, die Heizeinrichtung zur Erhitzung des Fluids mit dem Hopfenprodukt und der Fluidauslass steuerbar ausgebildet, und es ist eine mit dem Temperatursensor, dem Fluideinlass, dem Fluidauslass und der Heizeinrichtung verbundene Steuervorrichtung zur Steuerung der Aufbereitung des Fluids bzw. des Würzeteilstroms unter Zugabe des Hopfenprodukts vorgesehen.

Ausführungsbeispiele der Erfindung werden anhand einer Zeichnung näher erläutert. Dabei zeigen:

Fig. 1    schematisch eine Vorrichtung zur Bierbereitung gemäß einer ersten Ausführungsform und
Fig. 2    schematisch eine Vorrichtung zur Bierbereitung gemäß einer zweiten Ausführungsform.

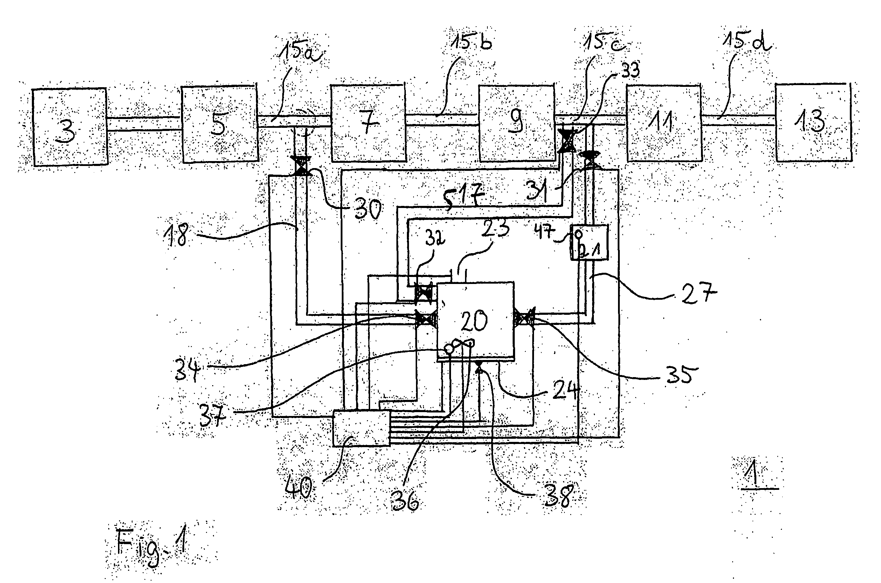

In Fig. 1 ist schematisch eine Vorrichtung 1 zur Bierbereitung dargestellt. Die Vorrichtung 1 umfasst hierbei einen Maischebottich 3, der der Zubereitung von Maische, insbesondere unter der Verwendung von Malz dient. An den Maischebottich 3 ist ein so genannter Läuterbottich 5 angeschlossen, in welchem eine Fest-Flüssig-Trennung der Maische durchgeführt wird. Insbesondere werden dabei Spelzen und andere feste Malzbestandteile abfiltriert. Die aus dem Läuterbottich 5 gewonnene Würze fließt anschließend in eine Würzepfanne 7, in welcher die Temperaturbehandlung der Würze zum Abreichern unerwünschter und Anreichern gewollter Aromastoffe durchgeführt wird. Bei üblichen Brauvorgängen spricht man hierbei auch von der "Würzekochung". Die Würze kann aber auch einer Rektifizierung unterzogen oder in einer sonstigen Art und Weise temperaturbehandelt werden. Der Würzepfanne 7 ist ein Heißtrubabscheider 9 nachgeschaltet, in welchem die sich während der Temperaturbehandlung der Würze gebildeten Eiweiße und sonstigen Feststoffe abgeschieden werden. Geschieht dies durch eine Zirkulation, so spricht man auch von einem "Whirlpool". Die aus dem Heißtrubabscheider 9 gewonnene Würze gelangt schließlich in einen Kühler 11, in dem die Würze auf eine gewünschte Temperatur abgekühlt wird. Anschließend wird die Würze gegebenenfalls unter Zusatz von Hefe in einem Gärbehälter 13 zu Bier vergoren.

Für eine Unterscheidung ist die Würzeleitung zwischen dem Läuterbottich 5 und der Würzepfanne 7 mit 15a, die Würzeleitung zwischen der Würzepfanne 7 und dem Heißtrubabscheider 9 mit 15b, die Würzeleitung zwischen dem Heißtrubabscheider 9 und dem Kühler 11 mit 15c und die Würzeleitung zwischen dem Kühler 11 und dem Gärbehälter 13 mit 15d bezeichnet.

Im Unterschied zu einer herkömmlichen Vorrichtung zur Bierbereitung wird bei der in Fig. 1 gezeigten Vorrichtung 1 ein zur Herstellung des Bieres benötigtes Hopfenprodukt nicht der Würze in die Würzepfanne 7 zugegeben. Stattdessen zweigt der Würzeleitung 15a zwischen dem Läuterbottich 5 und der Würzpfanne 7 eine Würzeanzapfleitung 18 ab, die in einen Heizbehälter 20 mündet. Der Heizbehälter 20 weist eine Einbringöffnung 23 zur Einbringung eines Hopfenprodukts auf und umfasst weiter eine Heizung 24 zur Erhitzung des abgezweigten Würzeteilstroms gemeinsam mit dem eingebrachten Hopfenprodukt. Darüber hinaus ist er noch mit einer Bypassleitung 17 verbunden, welche wiederum mit steuerbaren Ventilen 32 und 33 zur Absperrung und Öffnung versehen und mit der Würzeleitung 15c verbunden ist. Auslassseitig ist an dem Heizbehälter 20 eine Zuführleitung 27 angeschlossen, die über eine Diffusionsbatterie 21 in die Würzeleitung 15c zwischen dem Heißtrubabscheider 9 und dem Kühler 11 mündet. Ebenso kann auch der Heizbehälter 20 selbst als Diffusionsbaterie ausgebildet sein. Die Diffusionsbaterie 21 ist mit einem Ultraschallgenerator 47 verbunden. Die Würzeanzapfleitung 18 und die Zuführleitung 27 sind jeweils mittels steuerbaren Ventilen 30 bzw. 31 abzusperren bzw. zu öffnen.

Der Heizbehälter 20 ist als ein abgeschlossener Behälter ausgeführt und weist einen steuerbaren Fluideinlass 34 sowie eine steuerbaren Fluidauslass 35 auf. Im Inneren befindet sich ein Rührwerk 36 zur homogenen Durchmischung des einströmenden Würzeteilstroms mit dem zuzugebenden Hopfenprodukt. Weiter ist ein Temperatursensor 37 vorgesehen, der der Kontrolle der erzielten Temperatur in dem Heizbehälter 20 dient. Ferner ist an dem Heizbehälter 20 ein Dampfablassventil 38 zur Entspannung des Heizbehälters 20 angeordnet.

Mit den Ventilen 30, 31, 32 und 33, dem Fluideinlass 34, dem Fluidauslass 35, dem Rührwerk 36, dem Temperatursensor 37 und dem Dampfablassventil 38 ist eine Steuervorrichtung 40 verbunden, die der Steuerung der Abzweigung des Würzeteilstroms aus der Würzeleitung 15a, der Aufbereitung des abgezweigten Würzeteilstroms unter Zugabe eines Hopfenprodukts in dem Heizbehälter 20 und der Zuführung des aufbereiteten Würzeteilstroms in die Würzeleitung 15c sowie der Steuerung des Spülens des Heizbehälters 20 und der Diffusionsbaterie 21 über die Bypassleitung 17 dient.

Während Würze über die Würzeleitung 15a aus dem Läuterbottich 5 in die Würzepfanne 7 fließt, öffnet die Steuervorrichtung 40 das Einlassventil 30 der Würzeanzapfleitung 18. Auch wird der Fluideinlass 34 geöffnet. Als Folge strömt ein Würzeteilstrom aus der Würzeleitung 15a über die Würzeanzapfleitung 18 in den Heizbehälter 20. Vorab oder zugleich wird die Einbringöffnung 23 geöffnet, wodurch eine bestimmte Menge eines Hopfenprodukts, beispielsweise Hopfenextrakt, in den Heizbehälter 20 gelangt. Nachdem eine bestimmte Menge Würzeteilstrom eingeströmt ist, wird der Fluideinlass 34 über die Steuervorrichtung 40 wieder geschlossen. Anschließend wird die Heizvorrichtung 24, die als ein elektrisches Heizelement ausgebildet ist, zu einer Teilverdampfung des eingeströmten Würzeteilstroms bei geöffnetem Dampfablassventil 38 angesteuert. Anschließend wird das Dampfablassventil 38 geschlossen und die Mischung aus eingebrachtem Hopfenprodukt und Würzeteilstrom im abgeschlossenen Heizbehälter 20 für etwa 30 Minuten auf einer Temperatur von ca. 130°C gehalten. Der Heizbehälter 20 wirkt dabei gewissermaßen als eine Art "Schnellkochtopf".

Da der Heizbehälter 20 im Inneren vollständig mit dem Dampf aus dem ein-geströmten Würzeteilstrom ausgefüllt ist, sind auch die eingebrachten Hopfenprodukte vollständig vom Dampf umgeben. Es sind genügend OH⁻-Ionen vorhanden, so dass eine Isomerisierung der $\alpha$-Säuren erfolgen kann. Die Iso-$\alpha$-Säuren lösen sich bereits teilweise in dem eingebrachten Würzeteilstrom bzw. in seinem Dampf, so dass eine optimale Ausnutzung des eingebrachten Hopfenprodukts hinsichtlich seiner Bitterstoffe erfolgt.

Nach erfolgter Temperaturbehandlung des Würzeteilstroms in dem Heizbehälter 20 wird mittels der Steuervorrichtung 40 der Fluidauslass 35 und das Ventil 31 geöffnet. Der aufbereitete Würzeteilstrom strömt als Folge des Innendruckes im Behälter 20 über die Zuführleitung 27 in die Diffusionsbatterie 21, in welcher nicht gelöste Bestandteile des Hopfenprodukts zurückgehalten werden, und weiter in die Würzeleitung 15c und vermischt sich dort mit dem Würzehauptstrom aus dem Heißtrubabscheider 9. Nachdem sich der Druck im Heizbehälter abgebaut hat, werden die Ventile 32 und 33 geöffnet, wodurch über die Bypassleitung 17 geklärte Würze durch den Heizbehälter und die Diffusionsbatterie fließt. Hierdurch werden auch letzte Reste des Hopfenproduktes aus dem Heizbehälter ausgewaschen. In der Diffusionsbaterie 21, welche in diesem Fall nach dem Durchlaufverfahren arbeitet, kann somit eine weitere Extraktion durchgeführt werden, zu deren Beschleunigung der Ultraschallgenerator 47 betrieben wird.

Die Zugabe des Hopfenprodukts bzw. die Aufbereitung des abgezweigten Würzeteilstroms benötigt insgesamt weniger Zeit als die Temperaturbehandlung der Würze in der Würzepfanne 7 sowie die nachgeschaltete Heißtrubabscheidung im Heißtrubabscheider 9. Während die Würze im Hauptstrom temperaturbehandelt und der Heißtrub anschließend abgeschieden wird, kann demzufolge die Aufbereitung des abgezweigten Würzeteilstroms unter Zugabe des Hopfenprodukts erfolgen. Durch die aufgezeigte separate Aufbereitung des Würzeteilstroms unter Zugabe des Hopfenprodukts aufgrund der hohen Temperaturen wird eine nahezu vollständige Isomerisierung der $\alpha$-Säuren und somit ein hoher Ausnutzungsgrad des Hopfens erzielt. Ohne geschmackliche Veränderung des hergestellten Bieres und unter Einhaltung des deutschen Reinheitsgebots wird somit weniger Hopfen als bei herkömmlicher Bierbereitung benötigt. Dies führt zu einer deutlichen Kostenreduktion.

Zur Zuführung des Würzeteilstroms nach erfolgter Aufbereitung über die Zuführleitung 27 kann auch eine Pumpe eingesetzt werden. Dann ist es möglich, den Heizbehälter 20 nach der Temperaturbehandlung zu entspannen, wodurch unerwünschte Aromastoffe abgetrennt werden.

Wird ein feststoffreiches Hopfenprodukt anstelle von Extrakt verwendet, gelangt dieses nach dem öffnen des Fluidauslasses 35 über die Leitung 27 in die Diffusionsbaterie 21, in welcher die Feststoffe zurückgehalten und somit nicht in die restliche Würze eingebracht werden. Die zurückgehaltenen Feststoffe bauen eine Filterschicht auf, wodurch eine Fest-Flüssig-Trennung im vorbehandelten Fluid vollzogen wird. Werden die Ventile 32 und 33 geöffnet, strömt heißtrubfreie Würze erst durch den Heizbehälter 20 und spült diesen aus, wodurch sich die Filterschicht weiter vergrößert. Die von Heißtrub befreite Würze fließt zwangsläufig auch durch das zurückgehaltene feststoffreiche Hopfenprodukt in der Diffusionsbaterie 21 und extrahiert aus diesem aufgrund ihres gegen Null gehenden Bitterstoffanteils die Bitterstoffe aus. Diese Extraktion wird durch das Betreiben des Ultraschallgenerators 47 beschleunigt. Die Bitterstoffe werden somit effektiv in die restliche Würze eingebracht. Somit können auch bei Verwendung von feststoffreichen Hopfenprodukten nahezu alle Bitterstoffe in die Würze eingebracht werden. Der Volumenstrom - und somit auch die Extraktionszeit für die Würze im Hopfenprodukt - kann hierbei über die Ventile 32 und 33 mittels der Steuervorrichtung 40 geregelt werden.

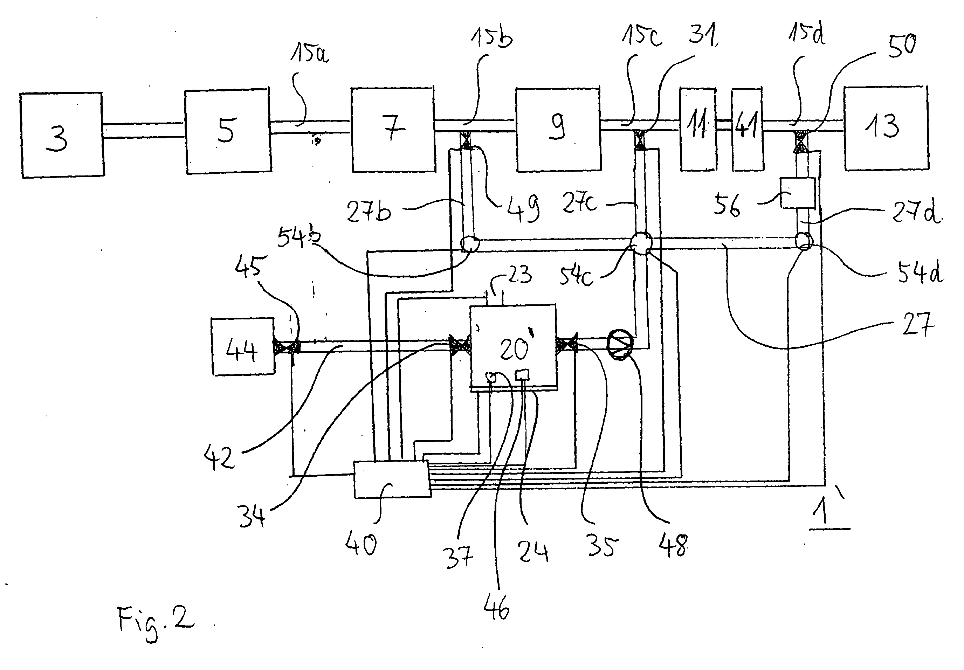

In Fig. 2 ist eine alternative Ausgestaltung einer Vorrichtung 1' zur Bierbereitung dargestellt. Die Vorrichtung 1' unterscheidet sich hierbei von der Vorrichtung 1 durch die Art der Aufbereitung eines Fluids unter Zugabe eines Hopfenprodukts. Zwischen dem Kühler 11 und dem Gärbehälter 13 ist weiter ein Kühltrubabscheider 41 angeordnet. In der Vorrichtung 1' gemäß Fig. 2 wird nicht ein Würzeteilstrom abgezweigt, sondern es wird aus einem Fluidtank 44 mittels einer Fluidleitung 42 ein Fluid separat in den Heizbehälter 20' eingebracht. Bei diesem Fluid handelt es sich beispielsweise um Wasser.

Während die Würze in der Würzepfanne 7 einer Temperaturbehandlung unterzogen wird, wird mittels der Steuervorrichtung 40 durch entsprechende Ansteuerung des Ventils 45 und des Fluideinlasses 34 eine bestimmte Menge an Wasser aus dem Fluidtank 44 in den Heizbehälter 20' geführt. Dem eingebrachten Wasser wird mittels der Einbringöffnung 23 wiederum ein Hopfenprodukt zugeführt. Über einen Ultraschallgenerator 46 wird die Mischung homogenisiert.

Anschließend wird bei geschlossenem Fluideinlass 34 und geschlossenem Fluidauslass 35 der Heizbehälter 20' mittels der elektrischen Heizvorrichtung 24 erhitzt. Die Temperatur wird auf etwa 130°C gebracht und mittels des Temperatursensors 37 überwacht. Während des Heizvorganges wird der Ultraschallgenerator 46 kontinuierlich betrieben.

Nach vollzogener Kochung des eingebrachten Fluids mit den Hopfenprodukten wird der Fluidauslass 35 geöffnet und die entstandene wässrige Lösung, die nun reich an Iso-$\alpha$-Säuren ist, mittels einer Pumpe 48 in die Zuführleitung 27 gefördert. Die Zuführleitung 27 weist drei Abzweigleitungen 27b, 27c und 27d auf, die jeweils in die Würzeleitungen 15b, 15c bzw. 15d münden. Über entsprechende Abzweigventile 54b, 54c und 54d ist eine gesteuerte Öffnung jeweils einer der Abzweigleitungen 27b, 27c und 27d möglich. Auf diese Weise kann das aufbereitete Fluid über die Abzweigleitung 27b der Würzeleitung 15b vor dem Heißtrubabscheider 9, über die Abzweigung 24c der Würzeleitung 15c vor dem Kühler 11 oder über die Abzweigung 27d der Würzeleitung 15d vor dem Gärbehälter 13 und nach dem Kühltrubabscheider 41 zugeführt werden. Somit ist eine Anpassung an verschiedene Biere oder an verschiedene eingesetzte Hopfenprodukte möglich.

Enthalten beispielsweise die eingebrachten Hopfenprodukte viele Feststoffe, so bietet es sich an, das aufbereitete Fluid über die Abzweigung 27b der Würzeleitung 15b vor dem Heißtrubabscheider 9 zuzuleiten. In diesem Fall erfolgt in dem Heißtrubabscheider 9 eine Abtrennung dieser unerwünschten Feststoffe. Wird andererseits als ein Hopfenprodukt ein Hopfenextrakt zugesetzt, so kann das aufbereitete Fluid mittels der Abzweigung 27d der Würzeleitung 15d direkt vor dem Gärbehälter 13 zugeleitet werden. In diesem Fall findet vor Zuleitung in die Würzeleitung 15d mittels eines Kühlers 56 eine Kühlung des aufbereiteten Fluids statt.

Auch die Vorrichtung 1' zeichnet sich aufgrund der hohen Temperaturen in dem Heizbehälter durch eine hohe Hopfenausbeute aus. Die nahezu vollständige Isomerisierung der α-Säuren führt zudem zu einer höheren Löslichkeit in dem Fluid bzw. in der Würze, in welche das aufbereitete Fluid eingebracht wird.

Bezugszeichenliste

| | |
|---|---|
| 1,1' | Vorrichtung |
| 3 | Maischebottich |
| 5 | Läuterbottich |
| 7 | Würzepfanne |
| 9 | Heißtrubabscheider (Whirlpool) |
| 11 | Kühler |
| 13 | Gärbehälter |
| 15a | Würzeleitung |
| 15b | Würzeleitung |
| 15c | Würzeleitung |
| 15d | Würzeleitung |
| 18 | Würzeanzapfleitung |
| 20 | Heizbehälter |
| 23 | Einbringöffnung |
| 24 | Heizung |
| 27 | Zuführleitung |
| 27b | Abzweigung |
| 27c | Abzweigung |
| 27d | Abzweigung |
| 30 | Ventil |
| 31 | Ventil |
| 34 | Fluideinlass |
| 35 | Fluidauslass |
| 36 | Rührwerk |
| 37 | Temperatursensor |
| 38 | Dampfablassventil |
| 40 | Steuervorrichtung |
| 41 | Kühltrubabscheider |
| 42 | Fluidleitung |
| 44 | Fluidtank |
| 45 | Ventil |
| 46 | Ultraschallgenerator |
| 48 | Pumpe |
| 49 | Ventil |
| 50 | Ventil |
| 54b | Abzweigventil |
| 54c | Abzweigventil |
| 54d | Abzweigventil |

**Patentansprüche**

1. Verfahren zur Bierbereitung, wobei aus einer Maische eine Würze gewonnen, die Würze anschließend einer Temperaturbehandlung unterzogen, aus der behandelten Würze der Heißtrub abgeschieden, und nach der Heißtrubabscheidung aus der Würze durch eine Gärung Bier gewonnen wird, **dadurch gekennzeichnet, dass** während des Brauprozesses ein Fluid separat mit einem Hopfenprodukt versetzt und zu einer Isomerisierung der Bitterstoffe erhitzt wird,
und dass das derart vorbehandelte Fluid anschließend der Würze zugeführt wird,
wobei das Fluid auf eine Temperatur oberhalb der von der Würze während der Temperaturbehandlung erreichten Temperatur erhitzt wird,
wobei das Fluid Wasser, Dampf oder Würze ist.

2. Verfahren nach Anspruch 1, **dadurch gekennzeichnet, dass** das Fluid während einer Temperaturbehandlung der Würze erhitzt wird.

3. Verfahren nach einem der vorhergehenden Ansprüche, **dadurch gekennzeichnet, dass** das Fluid auf eine derart hohe Temperatur erhitzt wird, dass sich in einem geforderten Zeitintervall, hier insbesondere der Zeit der Temperaturbehandlung der Würze, eine unter Berücksichtigung der Gesetze der Reaktionskinetik erreichbare maximale Endkonzentration an Isomerisierungsprodukten ergibt.

4. Verfahren nach einem der vorhergehenden Ansprüche, **dadurch gekennzeichnet, dass** als wässriges Fluid ein Würzeteilstrom aus der Würze, insbesondere aus den Nachgüssen, entnommen wird.

5. Verfahren nach einem der vorhergehenden Ansprüche, **dadurch gekennzeichnet, dass** während oder nach der Zuführung des vorbehandelten Fluids zur Würze eine Nachspülung mit einem Fluid, hier insbesondere einem weiteren Würzeteilstrom, erfolgt.

6. Verfahren nach Anspruch 5, **dadurch gekennzeichnet, dass** die Nachspülung in Form einer Fest-Flüssig-Extraktion erfolgt.

7. Verfahren nach Anspruch 6, **dadurch gekennzeichnet, dass** die Fest-Flüssig-Extraktion in Form eines Verdrängungsverfahrens durchgeführt wird.

8. Verfahren nach einem der Ansprüche 1 bis 7, **dadurch gekennzeichnet,
dass** dem Fluid ein Hopfenprodukt mit wenig Feststoffen, insbesondere ein Hopfenextrakt, zugegeben oder die Feststoffe vorher aus dem Fluid bzw. den Nachspülungen zumindest teilweise abgetrennt werden und das vorbehandelte Fluid der Würze nach der Heißtrubabscheidung zugeführt wird.

9. Vorrichtung zur Bierbereitung (1,1'),
mit einem Behälter (3) zur Maischebereitung,
mit einer Vorrichtung (7) zur Temperaturbehandlung der Würze,
mit einem Heißtrubabscheider (9) und
mit einem Gärbehälter (13),
**dadurch gekennzeichnet, dass**
die Vorrichtung (1,1') ferner einen separaten Heizbehälter (20,20'), umfassend eine Einbringstelle (23) für ein Hopfenprodukt und einen Fluideinlass (34) für ein insbesondere wässriges Fluid, zur Erhitzung des Fluids mit dem Hopfenprodukt aufweist,
wobei der Heizbehälter (20,20') weiter einen Fluidauslass (35) aufweist, der an eine Würze führende Stelle angeschlossen ist.

10. Vorrichtung (1,1') nach Anspruch 9, **dadurch gekennzeichnet, dass** der Fluideinlass (34) mit einer Würzeanzapfleitung (18) verbunden ist, die einer Würzeleitung (15a) zwischen dem Behälter (5) zur Maischebereitung und der Vorrichtung (7) zur Temperaturbehandlung der Würze abzweigt.

11. Vorrichtung (1,1') nach Anspruch 9 oder 10, **dadurch gekennzeichnet, dass** sie eine Diffusionsbatterie (21) aufweist.

12. Vorrichtung (1,1') nach einem der Ansprüche 9 bis 11, **dadurch gekennzeichnet, dass** der Fluidauslass (35) an eine dem Heißtrubabscheider (9) austretende Würzeleitung (15c) angeschlossen ist.

13. Vorrichtung (1,1') nach einem der Ansprüche 9 bis 12, **dadurch gekennzeichnet, dass** dem Heizbehälter (20,20') ein Temperatursensor (37) zugeordnet ist,
dass der Fluideinlass (34), gegebenenfalls die Zufuhr des Hopfenprodukts, die Heizeinrichtung (24) zur Erhitzung des Fluids mit dem Hopfenprodukt, und der Fluidauslass (35) steuerbar ausgebildet sind, und

dass eine mit dem Temperatursensor (37), dem Fluideinlass (34), dem Fluidauslass (35) und der Heizeinrichtung (24) verbundene Steuervorrichtung (40) zur Durchführung eines Verfahrens nach einem der Ansprüche 1 bis 9 ausgebildet ist.

14. Vorrichtung (1,1') nach einem der Ansprüche 9 bis 13, **dadurch gekennzeichnet, dass** sie eine Rechen- und Steuereinheit aufweist, die ausgebildet ist, die bei einem vorgegebenen Zeitintervall zur Erzeugung der maximalen Isomerisierungsprodukte benötigte Temperatur zu berechnen und im Heizbehälter (20) automatisch einzustellen.

**Claims**

1. Method for preparing beer, wherein a wort is obtained from a mash, the wort is then subjected to a heat treatment, the hot trub is separated from the treated wort, and
   after the hot trub separation beer is obtained by fermentation,
   **characterised in that**
   during the brewing process a hop product is separately added to a liquid and is heated to isomerise the bitter substances,
   and that the thus pre-treated liquid is then supplied to the wort, wherein the liquid is heated to a temperature above that reached by the wort during the heat treatment,
   wherein the liquid is water, vapour or wort.

2. Method according to claim 1, **characterised in that** the liquid is heated during a heat treatment of the wort.

3. Method according to one of the previous claims, **characterised in that** the liquid is heated to a high enough temperature, such that in a required period, here in particular in the time for the heat treatment of the wort, a maximum final concentration of isomerisation products is obtained, taking into account the laws of reaction kinetics.

4. Method according to one of the previous claims, **characterised in that** a wort partial flow is taken from the wort, in particular from the after worts, as the aqueous liquid.

5. Method according to one of the previous claims, **characterised in that** during or after the supply of the pre-treated liquid to the wort, there occurs a rinse with a liquid, here in particular with an additional wort partial flow.

6. Method according to claim 5, **characterised in that** the rinsing is carried out in the form of a solid-liquid extraction.

7. Method according to claim 6, **characterised in that** the solid-liquid extraction is carried out in the form of a displacement method.

8. Method according to one of the claims 1 to 7, **characterised in that** a hop product with little solids, in particular a hop extract, is added to the liquid or
   the solids are at least partially separated beforehand from the liquid or from the rinses and
   the pre-treated liquid is supplied to the wort after the hot trub separation.

9. Device for beer preparation (1,1'),
   with a container (3) for preparing the mash,
   with a device (7) for heat treatment of the wort,
   with a hot trub separator (9) and
   with a fermenter (13),
   **characterised in that**
   the device (1,1') further possesses a separate heating tank (20,20'), containing an insertion site (23) for a hop product and a liquid inlet (34) for an in particular aqueous liquid, for heating the liquid with the hop product,
   wherein the heating tank (20,20') further possesses a liquid inlet (35) that is connected to a wort supply point.

10. Device (1,1') according to claim 9, **characterised in that** the liquid inlet (34) is linked to a wort extraction line (18) that diverts the wort in a wort line (15a) between the tank (5) for the mash preparation and the device (7) for the heat treatment.

11. Device (1,1') according to claim 9 or 10, **characterised in that** it possesses a diffusion battery (21).

12. Device (1,1') according to one of the claims 9 to 11, **characterised in that** the liquid inlet (35) is connected to a wort line (15c) that exits from the hot trub separator (9).

13. Device (1,1') according to one of the claims 9 to 12, **characterised in that** a temperature sensor (37) is associated with the heating tank (20,20'), that the liquid inlet (34), optionally the supply of the hop product, the heating element (24) for heating the liquid with the hop product, and the liquid outlet (35) can be controlled, and that a control device (40) is linked with the temperature sensor (37), the liquid inlet (34), the liquid outlet (35) and the heating element (24) for carrying out the method according to one of the claims 1 to 9.

14. Device (1,1') according to one of the claims 9 to 13, **characterised in that** it possesses a processing and control unit that is designed to calculate and to automatically adjust the temperature required for producing the maximum isomerisation product for a given period in the heating tank (20).

**Revendications**

1. Procédé de production de bière, sachant qu'on obtient d'une maische un moût, que le moût subit ensuite un traitement thermique, qu'on sépare du moût traité la lie, et qu'on obtient du moût, après la séparation de la lie, par fermentation, de la bière, **caractérisé en ce que** pendant le processus de brassage, un fluide est mélangé de manière séparée à un produit à base de houblon et est chauffé jusqu'à une isomérisation des substances amères, et **en ce que** le fluide préalablement traité de cette manière est ensuite amené au moût, sachant que le fluide est porté à une température supérieure à la température atteinte par le moût lors du traitement thermique, sachant que le fluide est de l'eau, de la vapeur ou du moût.

2. Procédé selon la revendication 1, **caractérisé en ce que** le fluide est chauffé pendant un traitement thermique du moût.

3. Procédé selon l'une quelconque des revendications précédentes, **caractérisé en ce que** le fluide est porté à une température tellement élevée qu'il en découle, au cours d'un intervalle de temps requis, dans le cas présent notamment au cours du traitement thermique du moût, une concentration finale maximale sur les produits d'isomérisation, pouvant être atteinte en respectant les lois de la cinétique chimique.

4. Procédé selon l'une quelconque des revendications précédentes, **caractérisées en ce qu'**on extrait du moût, en particulier des moûts secondaires, en tant que fluide aqueux, un flux partiel de moût.

5. Procédé selon l'une quelconque des revendications précédentes, **caractérisé en ce qu'**est effectué, pendant ou après l'amenée du fluide préalablement traité vers le moût, un rinçage ultérieur avec un fluide, dans le cas présent notamment avec un autre flux partiel de moût.

6. Procédé selon la revendication 5, **caractérisé en ce que** le rinçage ultérieur est effectué sous la forme d'une extraction solide-liquide.

7. Procédé selon la revendication 6, **caractérisé en ce que** l'extraction solide-liquide est réalisée sous la forme d'un processus de refoulement.

8. Procédé selon l'une quelconque des revendications 1 à 7, **caractérisé en ce qu'**un produit à base de houblon présentant peu de matières solides, en particulier un extrait à base de houblon, est ajouté au fluide, ou **en ce que** les matières solides sont séparées au moins en partie au préalable du fluide ou des rinçages ultérieurs et, **en ce que** le fluide préalablement traité est amené au moût après la séparation de la lie.

9. Dispositif de préparation de bière (1, 1'), comprenant une cuve (3) pour la préparation de la maische, comprenant un dispositif (7) pour le traitement thermique du moût, comprenant un séparateur de lie (9) et comprenant une cuve de fermentation (13), **caractérisé en ce que** le dispositif (1, 1') présente en outre une cuve de chauffage (20, 20') séparée servant à chauffer le fluide avec le produit à base de houblon, laquelle cuve de chauffage comporte un endroit d'introduction (23) pour un produit à base de houblon et une entrée de fluide (34) pour un fluide en particulier aqueux,

sachant que la cuve de chauffage (20, 20') présente en outre une sortie de fluide (35), qui est raccordée à l'endroit guidant du moût.

10. Dispositif (1, 1') selon la revendication 9, **caractérisé en ce que** l'entrée de fluide (34) est reliée à un conduit de vidange de moût (18) qui dévie un conduit de moût (15a) entre la cuve (5) servant à la préparation de la maische et le dispositif (7) servant au traitement thermique du moût.

11. Dispositif (1, 1') selon la revendication 9 ou 10, **caractérisé en ce que** ledit dispositif présente une batterie de diffusion (21).

12. Dispositif (1, 1') selon l'une quelconque des revendications 9 à 11, **caractérisé en ce que** la sortie de fluide (35) est raccordée à un conduit de moût (15c) sortant du séparateur de lie (9).

13. Dispositif (1, 1') selon l'une quelconque des revendications 9 à 12, **caractérisé en ce qu'**un capteur de température (37) est associé à la cuve de chauffage (20, 20'),

**en ce que** l'entrée de fluide (34), éventuellement l'amenée du produit à base de houblon, le système de chauffage (24) servant à chauffer le fluide avec le produit à base de houblon et la sortie de fluide (35) sont réalisés de manière à pouvoir être commandés, et

**en ce qu'**un dispositif de commande (40) relié au capteur de température (37), à l'entrée de fluide (34), la sortie de fluide (35) et au système de chauffage (24) est réalisé pour la mise en oeuvre d'un procédé selon l'une quelconque des revendications 1 à 9.

14. Dispositif (1, 1') selon l'une quelconque des revendications 9 à 13, **caractérisé en ce que** ledit dispositif présente une unité de calcul et de commande, qui est réalisée afin de calculer la température nécessaire pour produire le maximum de produits d'isomérisation lors d'un intervalle de temps prédéfini et afin de régler cette dernière de manière automatique dans la cuve de chauffage (20).

Fig. 1

EP 2 227 535 B1

Fig. 2

EP 2 227 535 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2102362
- US 4212895 A
- US 4666731 A
- EP 0161806 A2
- DE 2515451 A1
- DE 2920765 B1
- EP 0363023 A1
- DE 10156829 A1
- DE 19619289 A1

**In der Beschreibung aufgeführte Nicht-Patentliteratur**

- Chemistry and Analysis of Hop and Beer Bitter Acids. **M. VERZELE ; D. KEUKELEIRE.** Developments in Food Science. Elsevier-Verlag, 04. Dezember 1991, 418
- **MALLOWICKI, M.G. ; SHELLHAMMER, T.H.** Isomerization and Degradation Kinetics of Hop (Humulus Lupulus) Acids in a Model Wort-Boiling System. *J. Agr. Food Chem.,* 2005, vol. 53, 4434-4439